(19)

Europäisches
Patentamt
European
Patent Office
Office européen
des brevets

(11) **EP 4 621 675 A1**

(12) **EUROPEAN PATENT APPLICATION**

(43) Date of publication:
24.09.2025 Bulletin 2025/39

(21) Application number: 25164886.1

(22) Date of filing: 19.03.2025

(51) International Patent Classification (IPC):
G06Q 10/06 (2023.01)        G06Q 50/04 (2012.01)

(52) Cooperative Patent Classification (CPC):
G06Q 10/06; G06Q 50/04

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.03.2024 US 202418610542

(71) Applicant: AIR PRODUCTS AND CHEMICALS,
INC.
Allentown, PA 18160-5500 (US)

(72) Inventors:
• Isom, Joshua D.
  Allentown, 18103 (US)
• Urich, Matthew D
  Emmaus, 18049 (US)
• Goheen, Christopher H
  Waynesboro, 17268 (US)
• Matos, Sonia Rando
  08902 Barcelona (ES)

(74) Representative: Beck Greener LLP
Fulwood House
12 Fulwood Place
London WC1V 6HR (GB)

(54) **A REAL-TIME CONTROL SYSTEM AND METHOD FOR CARBON INTENSITY COMPLIANCE IN A HYDROGEN SUPPLY NETWORK**

(57)    A method of operating a hydrogen supply network responsive to carbon intensity (CI) requirements comprising: determining the CI for hydrogen produced at the hydrogen production facilities; determining a network flow solution for the hydrogen supply network, the network flow solution defining a network solution space specifying a range of values for production rates of the hydrogen production facilities and a range of values of delivery rates for the hydrogen delivery points which satisfy predefined operational constraints of the hydrogen supply network; allocating production rates from the hydrogen production facilities to each of the plurality of delivery points based on predetermined criteria associated with the delivery points to define an allocation mapping for the hydrogen supply network; generating control variables for controlling the production rates of each of the hydrogen production facilities; and controlling the hydrogen production facilities in accordance with the determined control variables.

EP 4 621 675 A1

**Description**

The present invention relates to a real-time method and system for control of one or more industrial processes in a hydrogen supply network. More particularly, the present invention relates to the control of one or more industrial processes in a hydrogen supply network in order to meet carbon intensity (CI) constraints.

Industrial gas supply networks comprise one or more processes defining the production, transformation, transporting and distribution of gases for end-user applications.

In general, the inputs to industrial gas supply networks are feedstock elements (which may include raw materials and/or gaseous or liquid chemicals for production of gas or gas precursors) and energy sources to power those production and refining processes. The ultimate outputs of industrial gas supply networks are gaseous and/or liquified products delivered to end users. In certain applications, industrial gases may be used as fuel gases or liquified fuel gases for end users.

Hydrogen supply networks are of significant importance because they supply fuels vital for the functioning of economies around the world. However, hydrogen supply networks are increasingly scrutinized because the production, processing, distribution, and end uses of fuels are often associated with the environmental pollutants.

The technical field of the supply and use of fuels has undergone significant changes in recent years. Many of these changes have been driven by the urgent need to reduce greenhouse gas emissions and mitigate the impacts of climate change. As a result, there has been a growing interest in the development of low carbon and renewable fuels that can help to reduce the carbon intensity (CI) of transportation and other energy-intensive sectors.

Governments around the world have been implementing strict limits on the CI of fuels used in various applications. These limits have spurred innovation in the production, transportation, and processing of low carbon fuels, as well as the development of new technologies and systems for managing their CI throughout a hydrogen supply network.

One area of particular interest in this field is the production of fuels using renewable energy sources, such as solar, wind, and hydroelectric power. By harnessing these clean energy sources, it is possible to produce fuels with very low to zero CI at the point of production. Examples of such fuels include green ammonia, green hydrogen, and other low carbon fuels that can be used in a variety of applications, from powering vehicles to providing energy for industrial processes.

However, the production of low carbon fuels is only one part of the equation. In order to ensure that these fuels maintain an acceptable CI throughout the supply chain, it is necessary to carefully manage their transportation, intermediate processing, and final delivery to end users. This involves making a series of complex decisions including, but not limited to, production rates, factors such as ship routing, fuel selection and transportation speed and selection of land-based transportation routes and methods for delivery of the fuel to end users.

Each of these processes requires energy input, which can contribute to the CI of the final fuel product. Therefore, it is essential to develop efficient and effective control methods for managing the energy consumption and CI of these processing operations.

Hydrogen is a versatile fuel and energy source that can be used for numerous applications, including power generation, transport, industry, and heating. Hydrogen can also contribute to the decarbonization of the global energy supply chain due to the ability to produce hydrogen from renewable sources and emit no greenhouse gases (GHGs) when used. However, not all hydrogen is produced in a low-carbon or carbon neutral manner. Depending on the feedstock and the production process, hydrogen can have different levels of GHG emissions and environmental impacts.

To ensure that hydrogen production is aligned with the climate goals of the European Union (EU) and the United Kingdom (UK), both regions have developed regulatory frameworks and standards to define and promote low-carbon hydrogen. These frameworks and standards aim to provide certainty and incentives for investors, producers, and consumers of low-carbon hydrogen, as well as to ensure transparency and accountability in the hydrogen market.

In particular, Renewable Fuels of Non-Biological Origin (RFNBOs) must achieve at least 70% GHG emissions savings compared to the fossil fuels they replace, calculated over their life cycle. Moreover, RFNBOs must be produced from additional renewable electricity, meaning that the electricity used for their production does not reduce the amount of renewable electricity available in the grid or displace other uses of renewable electricity.

Additionally, RFNBOs must be traced through a mass balance chain of custody system, which ensures that the amount of renewable fuel claimed by an economic operator does not exceed the amount of renewable fuel supplied by that operator or by other operators in the same supply chain.

The EU has adopted two delegated acts to provide detailed rules on how to implement these requirements for RFNBOs. The first delegated act defines the conditions for RFNBOs to be considered as renewable and clarifies the principle of additionality for renewable electricity.

The second delegated act provides a methodology for calculating the life cycle GHG emissions for RFNBOs and recycled carbon fuels. The mass balance chain of custody system for RFNBOs in the EU is based on the International Sustainability and Carbon Certification (ISCC) EU 203 standard, which requires that mass balance calculations be closed every three months. The ISCC EU 203 standard also allows for an arbitrary policy on how system inventory is dispositioned and allocated, meaning that economic operators can choose how to assign renewable attributes to different consignments within their supply chain.

The delegated acts for EU RED II also allow arbitrary contiguous periods of time to be identified such that the average carbon intensity of the associated hydrogen production satisfies the CI threshold. This means that hydrogen producers can select different time intervals for defining their consignments based on their production profile and market conditions.

In the UK, low-carbon hydrogen is regulated under the UK Low Carbon Hydrogen Standard (LCHS), which sets a maximum threshold for the GHG emissions intensity of hydrogen production. The LCHS applies to all hydrogen production technologies and feedstocks, including fossil fuels with carbon capture and storage (CCS), biomass, waste, and renewable electricity. The LCHS defines low-carbon hydrogen as hydrogen that has a GHG emissions intensity of 20 gCO2e/MJLHV or less at the point of production.

The LCHS also sets out a methodology for calculating the GHG emissions associated with hydrogen production, accounting for various emissions categories, such as feedstock, process, sequestration, compression, purification, counterfactual, and fugitive emissions. Furthermore, the LCHS requires hydrogen producers to set out a risk mitigation plan for fugitive hydrogen emissions and to report their emissions data to an independent verifier.

The LCHS allows producers to define one or more monthly weighted average consignments such that producers can "cherry-pick" production intervals such that when periods of high carbon intensity are averaged with periods of low carbon intensity, the weighted average satisfies the threshold of 20 gCO2e/MJ. This means that hydrogen producers can optimize their consignment definition based on their production performance and market demand.

The LCHS is intended to support the implementation of the UK Hydrogen Strategy and Energy Security Strategy, which aim to establish up to 10 GW of low-carbon hydrogen production capacity by 2030. The LCHS will also provide a basis for future policy instruments and incentives for low-carbon hydrogen production and consumption in the UK.

However, despite these existing regulatory frameworks and standards in the EU and the UK, there are still challenges and gaps in ensuring that low-carbon hydrogen is produced and delivered in an efficient and reliable way. One of these challenges is how to manage the variability and uncertainty of renewable electricity supply and demand in relation to hydrogen production.

Another challenge is how to allocate and identify hydrogen consignments according to their GHG emissions intensity and origin in a complex and interconnected supply network. A further challenge is how to harmonize and reconcile different rules and requirements for low-carbon hydrogen across different regions and markets.

Therefore, there exists a need in the art to provide more effective methods and control systems to address these issues.

The following introduces a selection of concepts in a simplified form in order to provide a foundational understanding of some aspects of the present disclosure. The following is not an extensive overview of the disclosure and is not intended to identify key or critical elements of the disclosure or to delineate the scope of the disclosure. The following merely summarizes some of the concepts of the disclosure as a prelude to the more detailed description provided thereafter.

In general terms, the present disclosure is directed to a process and low-carbon hydrogen supply system that comprises a plurality of production facilities, a distribution network, a plurality of delivery points, a carbon intensity determination module, an allocation mapping module, and a production control module.

The system monitors and controls the production, distribution, and consumption of hydrogen consignments according to their carbon intensity and origin. The system ensures that hydrogen consignments delivered to different delivery points comply with their respective carbon intensity constraints when hindsight calculations and optimizations are performed.

The plurality of production facilities comprise means for producing hydrogen at a variable rate. The means for producing hydrogen may include any suitable technology or process that can produce low-carbon hydrogen from renewable or fossil sources, such as electrolysis, gasification, steam methane reforming with carbon capture, utilization, and storage (CCUS), or any combination thereof.

Several preferred aspects of the methods and systems according to the present invention are outlined below.

Aspect 1: A computer-implemented method of operating a hydrogen supply network responsive to carbon intensity (CI) requirements, the hydrogen supply network comprising a plurality of hydrogen production facilities and a plurality of hydrogen delivery points, the method being executed by at least one hardware processor and comprising: a) determining, using a computer system, the carbon intensity for hydrogen produced at the plurality of hydrogen production facilities; b) determining, using a computer system, a network flow solution for the hydrogen supply network, the network flow solution defining a network solution space specifying a range of values for production rates of the plurality of hydrogen production facilities in the network and a range of values of delivery rates for the plurality of hydrogen delivery points in the network which satisfy a plurality of predefined operational constraints of the hydrogen supply network; c) allocating, using a computer system and within the determined network solution space, production rates from each of the plurality of hydrogen production facilities to each of the plurality of delivery points based on predetermined criteria associated with the delivery points to define an allocation mapping for the hydrogen supply network; d) generating, using a computer system and based on the allocation mapping, control variables for controlling the production rates of each of the plurality of hydrogen production facilities; and e) controlling the plurality of hydrogen production facilities in accordance with the generated control variables.

Aspect 2: The computer-implemented method of Aspect 1, wherein step a) comprises utilizing one or more computational models configured to allocate greenhouse gas emissions to coproducts by one or more of: mass allocation; molar allocation; energy-basis allocation; and economic allocation.

Aspect 2A: The computer-implemented method of Aspect 2, wherein the one or more computational models comprises at least one surrogate model.

Aspect 2B: The computer-implemented method of Aspect 2A, wherein the surrogate model comprises expressions for carbon intensity which are dependent upon one or more operational parameters of at least one hydrogen production facility.

Aspect 3: The computer-implemented method of Aspect 2, wherein the one or more computational models comprises at least one surrogate model comprising expressions for carbon intensity which are dependent upon one or more operational parameters of at least one hydrogen production facility.

Aspect 4: The computer-implemented method of Aspect 3, wherein the one or more operational parameters comprises efficiency as a function of production rate.

Aspect 5: The computer-implemented method of Aspect 1, wherein step b) comprises determining production rates for the hydrogen production facilities to satisfy a plurality of operational constraints comprising one or both of: customer demand; and network hydraulic constraints.

Aspect 5A: The computer-implemented method of Aspect 5, wherein satisfying the constraints of network hydraulic constraints comprises bounding the flow rate on an edge in a digraph representing a pipe segment of the hydrogen supply network.

Aspect 5B: The computer-implemented method of Aspect 5A, wherein if the bounded flow rate range does not include a value of zero, determining the network flow solution comprises implementing a convex constraint such that a predicted pressure drop of the pipe segment is bounded below by a piecewise linear constraint.

Aspect 6: The computer-implemented method of any one of Aspects 1 to 5, wherein step b) comprises utilizing mixed integer quadratic analysis.

Aspect 7: The computer-implemented method of any one of Aspects 1 to 6, wherein steps b) and c) are performed simultaneously in a coupled optimization process.

Aspect 7A: The computer-implemented method of Aspect 7, wherein the coupled optimization process comprises the constraint $\sum_i q_{ij} d_j = p_i$, where $d_j$ is the rate of delivery to delivery point j and $p_i$ is the production rate at production facility i, the variables $p_i$ being computed as part of the network flow solution.

Aspect 8: The computer-implemented method of any one of Aspects 1 to 7, wherein step c) further comprises determining the rate of a low-carbon or renewable feedstock to one or more of the hydrogen production facilities.

Aspect 9: The computer-implemented method of any one of Aspects 1 to 8, wherein step c) further comprises allocating an inventory depletion rate to each hydrogen delivery point based on an amount of stored and transported hydrogen between a hydrogen production facility and a, and an inventory accrual rate to each hydrogen production facility based on a respective hydrogen production rate.

Aspect 10: The computer-implemented method of Aspect 9, wherein step c) further comprises allocating production rates such that the sum of the production rates and one or more inventory depletion rates allocated to a delivery point equals a hydrogen reception rate at the delivery point.

Aspect 11: The computer-implemented method of any one of Aspects 1 to 10, wherein in step c) the predetermined criteria consist of one or more of: a current or projected hydrogen demand at a delivery point; a sustainability metric of hydrogen produced by a production facility; a carbon intensity of hydrogen production by a production facility; or a carbon intensity limit for a delivery point.

Aspect 11A: The computer-implemented method of any one of the preceding Aspects, wherein the hydrogen supply network further comprises a delivery network comprising one or more hydrogen storage and hydrogen transportation elements arranged in the network between the hydrogen production facilities and the hydrogen delivery points.

Aspect 11B: The computer-implemented method of any one of Aspects 9, 10 or 11A, further comprising allocating inventory depletion rates to the delivery points based on the amount of stored and transported hydrogen, and to allocate an inventory accrual rate to each hydrogen production facility based on a respective hydrogen production rate.

Aspect 11C: The computer-implemented method of any one of Aspects 9, 10 or 11A, wherein each inventory depletion rate has an associated carbon intensity.

Aspect 11D. The computer-implemented method of any one of the preceding Aspects, wherein step c) further comprises allocating a production rate to a first group of delivery points only if the carbon intensity of the corresponding production facility is less than or equal to the carbon intensity limit for a delivery point in the first group of delivery points.

Aspect 11E. The computer-implemented method of Aspect 11D, wherein step c) further comprises allocating an inventory depletion rate to a delivery point in the first group of delivery points only if the associated carbon intensity is less than or equal to the carbon intensity limit for the delivery point.

Aspect 11F: The computer-implemented method of Aspect 11D or 11E, wherein step c) further comprises allocating a production rate to a second group of delivery points to ensure that a weighted average carbon intensity of the production rates and inventory depletion rates assigned to the delivery point in the second group of delivery points is less than or equal to the carbon intensity limit for the delivery point.

Aspect 11G: The computer-implemented method of any one of Aspects 9, 10 or 11A to 11F, wherein the associated carbon intensity of an inventory depletion rate is a weighted historical average of the carbon intensities of the production rates assigned to inventory accrual.

Aspect 11H: The computer-implemented method of any one of the preceding Aspects, wherein at least one delivery point is operable to provide hydrogen as a feedstock or fuel to at least one production facility.

Aspect 11I: The computer-implemented method of Aspect 11H, wherein hydrogen is provided to a delivery point operable to provide hydrogen as a feedstock or fuel to a production facility only if the carbon intensity of the inventory depletion rate is greater than the carbon intensity limits for all other delivery points.

Aspect 11J: The computer-implemented method of any one of the preceding Aspects, wherein at step c) if it is determined that at least some of the predetermined criteria cannot be satisfied, the method further comprises: f) generating a solution which minimizes the criteria violation and/or which indicates the criteria which cannot be satisfied.

Aspect 11K: The computer-implemented method of any one of the preceding Aspects, wherein step c) further comprises incorporating predetermined constraints on the greenhouse gas intensity of hydrogen allocated to a delivery point.

Aspect 11L: The computer-implemented method of Aspect 11K, wherein if it is determined that one or more constraints on the greenhouse gas intensity of hydrogen allocated to a delivery point cannot be satisfied, the method further comprises determining the allocation mapping by minimizing a weighted norm of violations of the constraints on the greenhouse gas intensity of hydrogen across all delivery points.

Aspect 11M: The computer-implemented method of Aspect 11L, wherein the weighted norm is a 2-norm.

Aspect 11N: The computer-implemented method of any one of the preceding Aspects, wherein step b) comprises utilizing an optimization process to determine the network flow solution.

Aspect 11O: The computer-implemented method of Aspect 11N, wherein if at step b) a network flow solution cannot be determined based on the plurality of predefined operational constraints of the hydrogen supply network, the method further comprises adjusting one or more parameters of the optimization process.

Aspect 11P: The computer-implemented method of Aspect 11O, wherein the adjusting of one or more parameters of the optimization process comprises adjusting the rates of low-carbon or renewable feedstocks to one or more of the hydrogen production facilities to satisfy the plurality of predefined operational constraints of the hydrogen supply network.

Aspect 11Q: The computer-implemented method of any one of the preceding Aspects, wherein step c) further comprises defining one or more allocation mappings using a set of variables $q_{i\_j}$ representing the fraction of total hydrogen product delivered to delivery point j which is allocated from production facility I, wherein for a given delivery point j the sum of $q_{i\_j}$ overall production facilities i is equal to one.

Aspect 11R: The computer-implemented method of any one of the preceding Aspects, wherein the determined allocation mapping in step c) satisfies an attribute constraint that for least one hydrogen delivery point j the sum over hydrogen production facilities i of hydrogen products of attribute terms $a_i$ and $g_{i\_j}$ is less than a constraint limit $c_j$.

Aspect 11S: The computer-implemented method of Aspect 11R, wherein the attributes terms $a_i$ comprise greenhouse gas intensities for hydrogen produced at a hydrogen production facility i and $c_j$ comprises an upper bound on the greenhouse gas intensity of hydrogen supplied to delivery point j.

Aspect 11T: The computer-implemented method of Aspect 11R or 11S, wherein at least two hydrogen delivery points are not bound by attribute constraint.

Aspect 11U: The computer-implemented method of Aspect 11T, wherein for any two delivery points k and m not bound by the attribute constraint, the allocation mapping determined in step c) satisfies $q_{i\_k} = q_{i\_m}$ for all production facilities i such that the attributes of hydrogen delivered to delivery points k and m are equal.

Aspect 11V: The computer-implemented method of any one of the preceding Aspects, wherein steps b) and c) comprise three coupled optimizations: 1) calculating the network flow solution, 2) allocation mapping of production rates to consumption rates, and 3) determining the delivery rate of a low-carbon or renewable feedstock to one or more of the hydrogen production facilities.

Aspect 12: A system for operating a hydrogen supply network responsive to carbon intensity (CI) requirements, the hydrogen supply network comprising a plurality of hydrogen production facilities and a plurality of hydrogen delivery points, the system comprising: at least one hardware processor; a CI determination module configured to determine the CI for hydrogen produced at the plurality of hydrogen production facilities; an allocation mapping module configured to: determine a network flow solution for the hydrogen supply network, the network flow solution defining a network solution space specifying a range of values for production rates of the plurality of hydrogen production facilities in the network and a range of values of delivery rates for the plurality of hydrogen delivery points in the network which satisfy a plurality of predefined operational constraints of the hydrogen supply network; and allocate, within the determined network solution space, production rates from each of the plurality of hydrogen production facilities to each of the plurality of delivery points based on predetermined criteria associated with the delivery points to define an allocation mapping for the hydrogen supply network; a production control module configured to generate, based on the allocation mapping, control variables for controlling the production rates of each of the plurality of hydrogen production facilities; and a process controller configured to control the plurality of hydrogen production facilities in accordance with the generated control variables.

Aspect 13: The system of Aspect 12, wherein the CI determination module is configured to utilize one or more computational models configured to allocate greenhouse gas emissions to coproducts by one or more of: mass allocation; molar allocation; energy-basis allocation; and economic allocation.

Aspect 14: The system of Aspect 12 or 13, wherein the allocation mapping module is configured to determine production rates for the hydrogen production facilities to satisfy a set of constraints comprising one or both of: customer demand; and network hydraulic constraints.

Aspect 14A: The system of Aspect 14, wherein satisfying the constraints of network hydraulic constraints comprises bounding the flow rate on an edge in a digraph representing a pipe segment of the hydrogen supply network.

Aspect 14B: The system of Aspect 14A, wherein if the bounded flow rate range does not include a value of zero, determining the network flow solution comprises implementing a convex constraint such that a predicted pressure drop of the pipe segment is bounded below by a piecewise linear constraint.

Aspect 15: The system of Aspect 12, 13 or 14, wherein the allocation mapping module is configured to determine a network flow solution and allocate production rates and delivery rates simultaneously in a coupled optimization process.

Aspect 15A: The system of Aspect 15, wherein the coupled optimization process comprises the constraint $\sum_j q_{ij} d_j = p_i$, where $d_j$ is the rate of delivery to delivery point j and $p_i$ is the production rate at production facility i, the variables $p_i$ being computed as part of the network flow solution.

Aspect 16: The system of Aspect 12, 13, 14, or 15, wherein the allocation mapping module is further configured to determine the rate of a low-carbon or renewable feedstock to one or more of the hydrogen production facilities.

Aspect 17: The system of any one of Aspects 12 to 16, wherein the allocation mapping module is further configured to allocate an inventory depletion rate to each hydrogen delivery point based on the amount of stored and transported hydrogen, and an inventory accrual rate to each hydrogen production facility based on a respective hydrogen production rate.

Aspect 18: The system of Aspect 17, wherein the allocation mapping module is further configured to allocate production rates such that the sum of the production rates and one or more inventory depletion rates allocated to a delivery point equals a hydrogen reception rate at the delivery point.

Aspect 19: The system of any one of clams 12 to 18, wherein the predetermined criteria consist of one or more of: a current or projected hydrogen demand at a delivery point; a sustainability metric of hydrogen produced by a production facility; a carbon intensity of hydrogen production by a production facility; or a carbon intensity limit for a delivery point.

Aspect 19A: The system of any one of the preceding Aspects, wherein the hydrogen supply network further comprises a delivery network comprising one or more hydrogen storage and hydrogen transportation elements arranged in the network between the hydrogen production facilities and the hydrogen delivery points.

Aspect 19B: The system of any one of Aspects 17, 18 and 19A, wherein the allocation mapping module is further configured to allocate inventory depletion rates to the delivery points based on the amount of stored and transported hydrogen, and to allocate an inventory accrual rate to each hydrogen production facility based on a respective hydrogen production rate.

Aspect 19C: The system of any one of Aspects 17, 18, 19A and 19B, wherein each inventory depletion rate has an associated carbon intensity.

Aspect 19D. The system of any one of the preceding Aspects, wherein the allocation mapping module is further configured to allocate a production rate to a first group of delivery points only if the carbon intensity of the corresponding production facility is less than or equal to the carbon intensity limit for a delivery point in the first group of delivery points.

Aspect 19E. The system of Aspect 19D, wherein the allocation mapping module is further configured to allocate an inventory depletion rate to a delivery point in the first group of delivery points only if the associated carbon intensity is less than or equal to the carbon intensity limit for the delivery point.

Aspect 19F: The system of Aspect 19D or 19E, wherein the allocation mapping module is further configured to allocate a production rate to a second group of delivery points to ensure that a weighted average carbon intensity of the production rates and inventory depletion rates assigned to the delivery point in the second group of delivery points is less than or equal to the carbon intensity limit for the delivery point.

Aspect 19G: The system of any one of Aspects 9, 10 or 19A to 19F, wherein the associated carbon intensity of an inventory depletion rate is a weighted historical average of the carbon intensities of the production rates assigned to inventory accrual.

Aspect 19H: The system of any one of the preceding Aspects, wherein at least one delivery point is operable to provide hydrogen as a feedstock or fuel to at least one production facility.

Aspect 19I: The system of Aspect 19H, wherein hydrogen is provided to a delivery point operable to provide hydrogen as a feedstock or fuel to a production facility only if the carbon intensity of the inventory depletion rate is greater than the carbon intensity limits for all other delivery points.

Aspect 19J: The system of any one of the preceding Aspects, wherein if it is determined that at least some of the predetermined criteria cannot be satisfied, the allocation mapping module is further configured to generate a solution which minimizes the criteria violation and/or which indicates the criteria which cannot be satisfied.

Aspect 19K: The system of any one of the preceding Aspects, wherein the allocation mapping module is further configured to incorporate predetermined constraints on the greenhouse gas intensity of hydrogen allocated to a delivery point.

Aspect 19L: The system of Aspect 19K, wherein if it is determined that one or more constraints on the greenhouse gas intensity of hydrogen allocated to a delivery point cannot be satisfied, the allocation mapping module is further configured to determine the allocation mapping by minimizing a weighted norm of violations of the constraints on the greenhouse gas intensity of hydrogen across all delivery points.

Aspect 19M: The system of Aspect 19L, wherein the weighted norm is a 2-norm.

Aspect 19N: The system of any one of the preceding Aspects, wherein the allocation mapping module is further configured to utilize an optimization process to determine the network flow solution.

Aspect 19O: The system of Aspect 19N, wherein if the allocation mapping module cannot determine a network flow solution based on the plurality of predefined operational constraints of the hydrogen supply network, the allocation mapping module is further configured to adjust one or more parameters of the optimization process.

Aspect 19P: The system of Aspect 19O, wherein adjusting one or more parameters of the optimization process comprises adjusting the rates of low-carbon or renewable feedstocks to one or more of the hydrogen production facilities to satisfy the plurality of predefined operational constraints of the hydrogen supply network.

Aspect 19Q: The system of any one of the preceding Aspects, wherein the allocation mapping module is further configured to define one or more allocation mappings using a set of variables $q\_i\_j$ representing the fraction of total hydrogen product delivered to delivery point j which is allocated from production facility l, wherein for a given delivery point j the sum of $q\_i\_j$ overall production facilities i is equal to one.

Aspect 19R: The system of any one of the preceding Aspects, wherein the determined allocation mapping in step c) satisfies an attribute constraint that for least one hydrogen delivery point j the sum over hydrogen production facilities i of hydrogen products of attribute terms $a\_i$ and $q\_i\_j$ is less than a constraint limit $c\_j$.

Aspect 19S: The system of Aspect 19R, wherein the attributes terms $a\_i$ comprise greenhouse gas intensities for hydrogen produced at a hydrogen production facility i and $c\_j$ comprises an upper bound on the greenhouse gas intensity of hydrogen supplied to delivery point j.

Aspect 19T: The system of Aspect 19R or 19S, wherein at least two hydrogen delivery points are not bound by attribute constraint.

Aspect 19U: The system of Aspect 19T, wherein for any two delivery points k and m not bound by the attribute constraint, the allocation mapping determined in step c) satisfies $q\_i\_k = q\_i\_m$ for all production facilities i such that the attributes of hydrogen delivered to delivery points k and m are equal.

Aspect 19V: The system of any one of the preceding Aspects, wherein the allocation mapping module is further configured to perform three coupled optimizations: 1) calculating the network flow solution, 2) allocation mapping of production rates to consumption rates, and 3) determining the delivery rate of a low-carbon or renewable feedstock to one or more of the hydrogen production facilities.

Aspect 20: A non-transitory computer readable storage medium storing a program of instructions executable by a machine to perform a method of operating a hydrogen supply network responsive to carbon intensity (CI) requirements, the hydrogen supply network comprising a plurality of hydrogen production facilities and a plurality of hydrogen delivery points, the method being executed by at least one hardware processor and comprising: a) determining, using a computer system, the carbon intensity for hydrogen produced at the plurality of hydrogen production facilities; b) determining, using a computer system, a network flow solution for the hydrogen supply network, the network flow solution defining a network solution space specifying a range of values for production rates of the plurality of hydrogen production facilities in the network and a range of values of delivery rates for the plurality of hydrogen delivery points in the network which satisfy a plurality of predefined operational constraints of the hydrogen supply network; c) allocating, using a computer system and within the determined network solution space, production rates from each of the plurality of hydrogen production facilities to each of the plurality of delivery points based on predetermined criteria associated with the delivery points to define an allocation mapping for the hydrogen supply network; d) generating, using a computer system and based on the allocation mapping, control variables for controlling the production rates of each of the plurality of hydrogen production facilities; and e) controlling the plurality of hydrogen production facilities in accordance with the generated control variables.

Aspect 21: A non-transitory computer readable storage medium according to Aspect 20, further configured to carry out the method of any one of Aspects 1, 2, 2A, 2B, 3 to 5, 5A, 5B, 6, 7, 7A, 8 to 11 and 11A to 11V.

Embodiments of the present invention will now be described by example only and with reference to the figures in which:

FIGURE 1 is a schematic diagram of a generalized hydrogen supply network;
FIGURE 2 is a schematic diagram of a control system according to an embodiment;
FIGURE 3 is a schematic node-arc diagram representative of a pipe segment;
FIGURE 4 is a schematic diagram of a piecewise linear constraint function;
FIGURE 5 is a flow diagram of a method according to an embodiment;
FIGURE 6 is a schematic diagram of a specific exemplary hydrogen supply network; and
FIGURE 7 is a calculation methodology of the present invention applied to the specific example of Figure 6.

Embodiments of the present disclosure and their advantages are best understood by referring to the detailed description that follows. It should be appreciated that like reference numbers are used to identify like elements illustrated in one or more of the figures, wherein showings therein are for purposes of illustrating embodiments of the present disclosure and not for purposes of limiting the same.

Various examples and embodiments of the present disclosure will now be described. The following description provides specific details for a thorough understanding and enabling description of these examples. One of ordinary skill in the relevant art will understand, however, that one or more embodiments described herein may be practiced without many of these details. Likewise, one skilled in the relevant art will also understand that one or more embodiments of the present disclosure can include other features and/or functions not described in detail herein. Additionally, some well-known structures or functions may not be shown or described in detail below, so as to avoid unnecessarily obscuring the relevant description.

The present invention is directed to the technical field of control systems for hydrogen supply networks to meet greenhouse gas intensity constraints.

Modern regulatory incentives for production of low-carbon hydrogen allow for the application of a mass balance chain of custody methodology. However, the regulatory incentives require that the mass balance for a hydrogen supply network be closed and reconciled only after a relatively long period, typically three months. Furthermore, regulatory incentives provide extensive flexibility on how hydrogen production consignments can be identified, and this process of identifying hydrogen production consignments need only be finalized after a relatively long period, typically one month.

The periods for performing a mass balance chain of custody reconciliation and a hydrogen production consignment definition are long and require *ex post facto* calculations and optimizations. However, these calculations and optimizations are not aligned with the need for real-time control of a low-carbon hydrogen supply network.

Therefore, there exists a need for a control system for a hydrogen supply network to ensure that production consignments and the associated mass balance consignments will meet disparate carbon intensity constraints associated with delivery points. Further, there is a need for a control system that accounts for the fact that there is more flexibility in averaging and batching of consignments for hydrogen production facilities than there is for hydrogen end-use delivery points.

The technology described herein provides technical improvements to the existing control of variables related to industrial fuel production, transportation and downstream processing to produce and supply hydrogen to end users. Technical improvements enable one or more production facilities to be controlled in order to manage technical considerations and constraints on hydrogen production and supply. One such technical constraint is the need to meet CI requirements for supplied hydrogen to be classed as low carbon hydrogen.

The present invention defines a control system which governs the real-time operations of a hydrogen supply network to guarantee that consignments of hydrogen supplied to delivery points will comply with carbon intensity constraints when *ex post facto* batching and mass balance calculations and optimizations are performed.

*OVERVIEW OF HYDROGEN SUPPLY NETWORK*

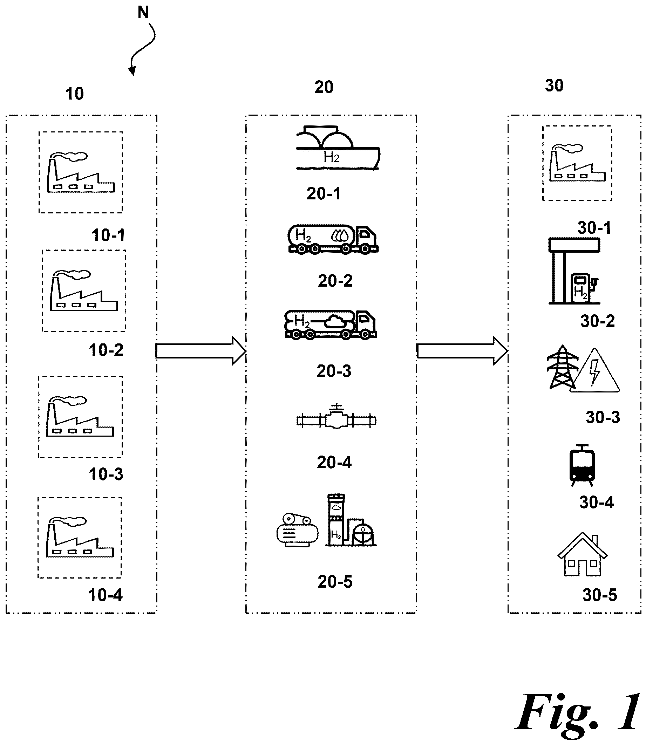

Figure 1 shows a general schematic diagram of an exemplary hydrogen supply network N for illustration purposes. The schematic diagram is represented such that the supply chain of the hydrogen supply network N is broken into three categories - production facilities 10, transport and storage infrastructure 20 and delivery points 30.

It will be understood that any suitable permutation of one or more individual elements of each of the production facilities 10, transport and storage infrastructure 20 and delivery points 30 may form a hydrogen supply pathway forming part of the network N as will be described below.

In Figure 1, the production facilities 10 of the hydrogen supply network N are operable to produce hydrogen from feedstocks. Each of the production facilities is configured to produce hydrogen at a production rate which is selectable and can be varied as a function of time between maximum and minimum levels. In other words, each of the production facilities can produce hydrogen at a selected variable rate. Hydrogen produced in the production step may be, but is not necessarily limited to, "green" hydrogen produced using renewable energy.

The group of production facilities 10 may comprise any suitable number and type of production facilities operable to produce hydrogen at a variable rate. The means for producing hydrogen may include any suitable technology or process that can produce low-carbon hydrogen from renewable or fossil sources.

For example, industrial gas production facilities 10 may comprise hydrogen production plants comprising an electrolyser 10-1 operable to produce hydrogen by electrolysis of feedstocks such as water, brine or steam.

Alternatively, industrial gas production plants 10 may comprise gasification plants 10-2 or a reformer 10-3 operable to produce liquid or gaseous hydrogen through steam reforming using methane as a feedstock.

Alternatively, hydrogen may be produced from a hydrogen production plant forming part of an ammonia production plant 10-4. An ammonia production plant 10-4 may, in examples, comprise a hydrogen production plant, an air separation unit (ASU) and an ammonia synthesis plant. Storage for produced hydrogen may also be provided.

In order to reduce the carbon intensity of the production process, electricity for powering one or more of the industrial gas production plants may generated at least in part by renewable energy sources such as wind and/or the solar power sources although other sources may optionally be utilized. Green fuel produced using renewable power sources will have very low to zero CI at the point of production.

Each of the production facilities 10-1, 10-2, 10-3, 10-4 may have different capacities, efficiencies, costs, and environmental impacts.

The transport and network infrastructure 20 may comprise any suitable elements which are operable to transport hydrogen from the production facilities 10 to respective delivery points 30 and/or store hydrogen as part of the process of transportation from the production facilities 10 to the delivery points 30.

Any suitable infrastructure elements may be provided. Non-limiting examples may include ships and tankers 20-1, transportation as liquid or gaseous hydrogen by truck 20-2, 20-3, transportation by pipeline 20-4 or compression and storage elements 20-5.

Storage elements may store liquid hydrogen and/or compressed gaseous hydrogen. Typical storage systems may include pressure vessels and/or pipe segments connected to a common inlet/outlet header. The pressure vessels may be spheres, for example, to about 25 m in diameter, or "bullets" which are horizontal vessels with large L/D ratios (typically up to about 12:1) with diameters up to about 12 m. In certain geographies, underground caverns may be included as storage systems.

However, this is not intended to be limiting and any other suitable infrastructure which is operable to store hydrogen safely and efficiently may be used.

A number of these elements may be used in a typical pathway as part of the network N; for example, hydrogen may be transported from a production facility 10 to a delivery point 30 by means of a combination of ship 20-1, truck 20-2 and pipeline 20-4.

Delivery points 30 may comprise any suitable infrastructure for receiving and utilizing hydrogen produced in one or more of the production facilities 10.

Hydrogen may be utilized in hydrogen may use the hydrogen directly (e.g. as part of an industrial process outside of the hydrogen supply network N) or may supply the hydrogen fuel to third party customers or users at an end user location (e.g. a fuel station or depot).

A number of possible examples of delivery points 30 are shown in Figure 1. For hydrogen as a low carbon product, delivery points in the form of end user locations may, in non-limiting examples, include industrial processing sites or facilities 30-1.

For hydrogen as a low carbon fuel, the end user locations may comprise hydrogen fueling stations or hydrogen fuel depots 30-2. Hydrogen may also be used as a fuel or energy resource for power generation (e.g. a power plant 30-3), transportation (e.g. public, commercial or private transport 30-4) or domestic/commercial applications (such as domestic or commercial heating 30-5).

Each delivery point 30 may have different requirements, preferences, prices and CI constraints. For example, when hydrogen is sold as a green fuel, there will be stringent CI requirements for that fuel. These are governed by rules such as, for example, RED II in Europe.

In embodiments, at least one delivery point 30 may be operable to provide hydrogen as a feedstock or fuel to at least one production facility 10. For example, a delivery point 30 may be a power plant that uses hydrogen for electricity generation and provides excess hydrogen to a production facility that uses hydrogen for gasification or reforming.

In such cases, hydrogen may be provided to a delivery point operable to provide hydrogen as a feedstock or fuel to a production facility only if the carbon intensity of the inventory depletion rate is greater than the carbon intensity limits for all other delivery points. This may ensure that low-carbon hydrogen is prioritized for other delivery points that have stricter carbon intensity constraints.

*CONTROL SYSTEM 100*

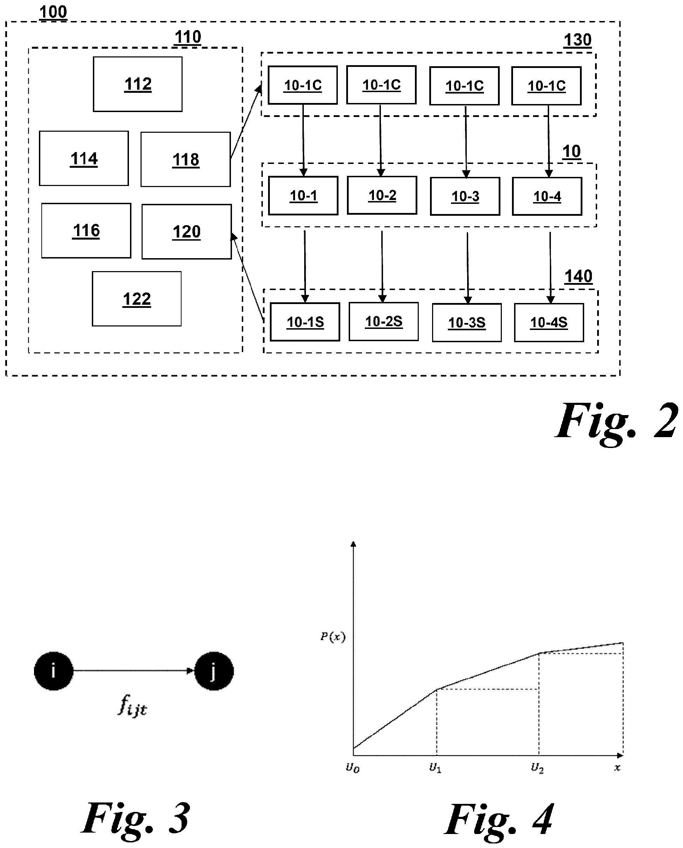

Figure 2 shows a schematic diagram of a control system 100 for controlling elements of the hydrogen supply network N.

In embodiments, the present invention provides a method of, and system for, controlling processes within the hydrogen supply network N. In embodiments, the control system 100 is operable to receive inputs from technical sources and determine optimum operating parameters for one or more production facilities 10 as described below.

The control system 100 comprises a controller 110. The control system 100 further comprises a process controller 130 to enable control of production facilities and a data input block 140 for obtaining and transmitting data from the network N.

The controller 110 comprises at least one hardware processor 112. The controller 110 further comprises a carbon intensity determination module 114, an allocation mapping module 116, a production control module 118, a data acquisition module 120 and a data communication module 122.

*CARBON INTENSITY DETERMINATION MODULE 114*

The carbon intensity determination module 114 may be configured to determine the carbon intensity of hydrogen produced at the production facilities 10-1, 10-2, 10-3, 10-4. The carbon intensity determination module 114 may use any suitable methodology or calculation operable to estimate the greenhouse gas (GHG) emissions associated with the production of hydrogen from these facilities 10-1, 10-2, 10-3, 10-4.

This may, in embodiments, be a net value of the CI and the carbon intensity determination module 114 may also account for any credits or offsets that may apply to the production of low-carbon hydrogen.

In embodiments, the carbon intensity determination module 114 may determine the carbon intensity of hydrogen produced at the production facilities 10-1, 10-2, 10-3, 10-4 using a number of approaches.

In specific embodiments, the carbon intensity determination module 114 determines the carbon intensity of hydrogen produced at the production facilities 10-1, 10-2, 10-3, 10-4 using one or more computational models configured to allocate greenhouse gas emissions to coproducts using one or more of: 1) mass allocation, 2) molar allocation, 3) energy-basis allocation, or 4) economic allocation.

In specific embodiments, one or more life-cycle analysis (LCA) models may be utilized. LCA comprises analytical methods for estimating the aggregate quantity of greenhouse gases emitted during a full fuel life cycle. The carbon intensity determined from one or more production facilities 10-1, 10-2, 10-3, 10-4 may include, for example, the direct effects resulting from producing and using the fuel, together with any indirect effects associated with the fuel.

In non-limiting embodiments, direct effects may comprise feedstock generation or extraction, feedstock conversion to a final fuel or fuel mixture, distribution, storage, delivery, and final use of the finished fuel by the end user.

As noted, a low carbon fuel standard (LCFS) carbon intensity expresses the combined atmospheric heat-trapping effect of five GHGs: $CO_2$, methane ($CH_4$), nitrous oxide ($N_2O$), volatile organic compound (VOC), and carbon monoxide (CO). Because these gases are not equivalent in terms of their ability to trap atmospheric heat, they are standardized to the heat-trapping capability of $CO_2$.

The LCA models may incorporate any suitable allocation methodologies and may be parameterized using values obtained from a regulation or an external model.

Alternatively or additionally, one or more surrogate models may be used as alternatives or additions to LCA models.. Surrogate models comprise approximate mathematical models to generate CI values corresponding to those generated from the LCA models. In other words, a surrogate model is operable to accurately replicate CI results generated from an LCA model, but is more computationally efficient and may, in embodiments, be integrated with software systems (such as operation systems and control systems) in a manner that LCA models cannot.

In embodiments, these models may comprise a computationally tractable surrogate model for the modelling of digital CI. Any suitable form or combination of forms of surrogate model may be used. In embodiments, these may include one or more of: linear, rational, or bilinear as a function of production facility 10-1, 10-2, 10-3, 10-4 decision variables. In embodiments, production facility 10-1, 10-2, 10-3, 10-4 decision variables may comprise any suitable control variable such as production rate, steam rate, low carbon feedstock utilization etc.

In embodiments, CI values may be dependent on control variables such as production facility 10-1, 10-2, 10-3, 10-4 rates because production facility 10-1, 10-2, 10-3, 10-4 efficiencies may have a dependence upon production facility 10-1, 10-2, 10-3, 10-4 rates. In other words, the carbon intensity models may comprise variables and/or parameters which capture the effects of the operating conditions of the hydrogen production facilities on the carbon intensity of the hydrogen.

Therefore, in embodiments, it is necessary to model further the impact of production facility 10-1, 10-2, 10-3, 10-4 rates on efficiencies. In embodiments, this may be achieved through the use of one or more of: linear models; Box-Jenkins (BJ) models; piecewise linear models; and multivariate models. In other words, the carbon intensity models may comprise expressions for carbon intensity are derived from other models which capture the efficiency of the production facility 10-1, 10-2, 10-3, 10-4 as a function of the production facility 10-1, 10-2, 10-3, 10-4 operating conditions.

*ALLOCATION MAPPING MODULE 116*

The allocation mapping module 116 may be configured to allocate hydrogen production rates from the production facilities 10 to the delivery points 20 based on one or more predetermined parameters associated with the delivery points 20.

The predetermined parameters for each delivery point 20 may comprise one or more of: a current or projected hydrogen demand at the delivery point; a sustainability metric of hydrogen produced by a production facility; a carbon intensity of hydrogen production by a production facility; or a carbon intensity limit for the delivery point.

In addition, other predetermined parameters may be set for a delivery point 20 as required. For example, a delivery point 20 may specify that a particular percentage or percentage range of product originates from a specific production facility 10. This predetermined parameter may set a particular constraint on the resulting allocation mapping by the allocation mapping module 116.

The allocation mapping module 116 may also allocate inventory depletion rates to the delivery points 20 based on the amount of stored and transported hydrogen, and inventory accrual rates to the production facilities 10 based on their production rates. The allocation mapping module 116 may also assign different types of consignments to different groups of delivery points based on their carbon intensity constraints.

In embodiments, the allocation mapping module 116 may achieve this functionality by first determining a network flow solution for the hydrogen supply network, the network flow solution specifying overall production rates for the plurality of hydrogen production facilities in the network and delivery rates for the plurality of hydrogen delivery points in the network. This determines a network flow solution space which satisfies one or more predetermined constraints. However, as described below, this is non-limiting and other configurations or solutions are possible. For example, the allocation mapping module 116 may perform a coupled optimization for determining the network flow solution and the allocation mapping as described below.

In embodiments, the one or more predetermined constraints are selected from the groups of: customer demand constraints; and hydraulic constraints.

Once the network flow solution has been determined, the allocation mapping module 116 is operable to allocate production rates from each of the plurality of hydrogen production facilities to each of the plurality of delivery points based on predetermined criteria associated with the delivery points to define an allocation mapping for the hydrogen supply network. In embodiments, this may comprise two optimizations: customer allocation mapping and feedstock allocation mapping.

Alternatively, the allocation mapping and network flow solution steps may be computed by solving a coupled optimization problem. When the allocation mapping and network flow solution are computed simultaneously, the problems are coupled with the constraint that $\sum_i q_{ij} d_j = p_i$, where $d_j$ is the rate of delivery to delivery point j and $p_i$ is the production rate at production facility i, the variables $p_i$ being computed as part of the network flow solution.

In embodiments, the allocation mapping module 116 is operable to create allocation mappings using a set of variables q_i_j representing the fraction of total product delivered to delivery point j which is allocated from production facility i, such that for a given delivery point j the sum of q_i_j overall production facilities i is equal to one.

In embodiments, for at least one delivery point j the determination of an allocation mapping satisfies constraint that the sum over production facilities i of products of attribute terms a_i and q_i_j is less than constraint limit c_j.

In specific embodiments, the attributes terms a_i comprise greenhouse gas intensities for hydrogen produced at a production facility I and c_j comprises an upper bound on the greenhouse gas intensity of hydrogen supplied to delivery point j.

In embodiments, delivery may be made to delivery points which do not require the above constraints. For example, there may be existing hydrogen supply networks where delivery points such as oil refineries are not required to meet a specific carbon intensity requirement. Therefore, in these cases, there is no need to allocate hydrogen having a greenhouse gas intensity below an indicated threshold to these delivery points.

However, unbounded scenarios such as this can be problematic in optimization problems. In addition, in the interests of fairness across these types of delivery points, it is desired that the allocated attributes of hydrogen supplied to these delivery points do not differ substantially from one another and as a function of time.

As a result, in embodiments, at least two delivery points are absent the constraint that the sum over production facilities i of products of attribute terms a_i and q_i_j is less a constraint limit c_j. This situation holds for many delivery points such as oil refineries described above.

In these situations, it is desirable that the allocated attributes be relatively stable over time and not differ materially from one delivery point to another. To enhance attribute stability and ensure equitable allocation of attributes, in embodiments an alternative equitable constraint is applied such that for any delivery points k and m not having an attribute constraint, the allocation mapping satisfies q_i_k = q_i_m for all production facilities i, ensuring that the attributes of hydrogen delivered to delivery points k and m are equal.

This has numerous benefits. For example, absent the stability-promoting constraint q_i_k = q_i_m, the q variables would be unconstrained by any specified constraints. As a result, the mathematical problem for computing the allocation mapping would be underdetermined. It is well known that the solution of underdetermined mathematical optimization problems can be numerically unstable, and therefore the carbon intensity attributes allocated to a customer could fluctuate substantially from one computation period to the next. In embodiments, this aspect of the invention avoids these issues.

A specific embodiment of the configuration and operation of the allocation mapping module 114 will be described below.

The specific embodiment utilizes mixed integer quadratic programming methodologies based on a node-arc product model. An exemplary formulation of a simulated pipe segment is shown in Figure 3.

Figure 3 shows a pipe segment modelled as two nodes *i* and *j* connected by an edge (or arc) to form a digraph configuration. In the Figure 3 model, the flow into a node minus the flow out of a node equals the net demand at a node, and the flow along the edge $f_{ijt}^{p}$ corresponds to the flow of product p from node i to node j during time bucket t. The value of $f_{ijt}^{p}$ can be negative to represent bi-directional flow.

In embodiments, the flow rate is bounded on the edge in the digraph representing a pipe segment. It is then necessary to model the pressure drop across the pipe segment. If the flow is bi-directional, then for computational efficiency the pressure drop relationship is linearized.

However, if the represented pipe segment has flow along the corresponding edge that can flow only in a single direction, then the pressure drop can be modelled more comprehensively. In embodiments, this is achieved by bounding the pressure drop by a piecewise linear constraint. In embodiments, this is defined and solved as a set of piecewise linear convex inequalities.

Figure 4 shows a schematic diagram of the pressure drop P(x) as a function of distance x along a pipe segment. The function P(x) is divided into a plurality of tiers or segments which can be individually modelled to derive the whole function to be represented. This is shown in expression 1) below:

$$p(x) = \begin{cases} a_1 x + b_1 & if \quad x \in [l_1, u_1] \\ a_2 x + b_2 & if \quad x \in ]u_1, u_2] \\ \quad \cdot & \quad \cdot \\ \quad \cdot & \quad \cdot \\ a_n x + b_n & if \quad x \in ]u_{n-1}, u_n] \end{cases}$$

1)

Given the slope is known for each tier, the total cost is the sum of the costs in each tier. This can then be converted to a typical piecewise linear function as set out in expression 2) below:

$$\text{2) } p(x) = \begin{cases} a_1 x + b_1 & if \ x \in [u_0, u_1] \\ a_2(x - u_1) + b_2 + a_1 u_1 + b_1 & if \ x \in [u_1, u_2] \\ \quad \vdots & \quad \vdots \\ a_n(x - u_{n-1}) + b_n + a_{n-1}(u_{n-1} - u_{n-2}) + b_{n-1} + \cdots + b_1 & if \ x \in [u_{n-1}, u_n] \end{cases}$$

Two options exist for the solution of expression 2). First, x can be treated as a continuous variable. Variable y is then defined as $y = f(x)$, where f is the piecewise-linear function defined by the points $(x_1, y_1), (x_2, y_2), \cdots, (x_n, y_n)$.

This then leads to expression 3):

$$\sum_{i}^{n} \lambda_i x_i = x$$

$$\sum_{i}^{n} \lambda_i y_i = y$$

$$\sum_i^n \lambda_i = 1$$

$$\lambda_i \geq 0, \quad i = 1, 2, \cdots, n$$

$$\lambda_i \in SOS2, \qquad i = 1, 2, \cdots, n$$

Where $\lambda_i$ is a continuous variable.

Alternatively, the problem can be solved using mixed integer linear programming (MILP) as set out in the formulations below:

$u_0$: lower bound of x

$u_n$: upper bound of x

$l_i$: binary variable if $x \geq u_i$, $i \in \{1, \cdots, n - 1\}$.

$n$: max number *of break points, n = tierN* - 1

$$l_i = 1 \rightarrow x \geq u_i, i \in \{1, \cdots, n - 1\}$$

$$l_i = 1 \rightarrow l_j = 1 \quad \forall j < i, i = 2, \cdots, n - 1$$

$$l_i = 1 \rightarrow x \geq u_i, i \in \{1, \cdots, n - 1\}$$

Introduce:

$$z_1 = \begin{cases} a_2 x + b_2 & if \ l_1 = 1 \\ a_1 x + b_1 & if \ l_1 = 0 \end{cases}$$

$$z_2 = \begin{cases} (a_3 - a_2)x + b_3 - b_2 & if \ l_2 = 1 \\ 0 & if \ l_2 = 0 \end{cases}$$

$$z_{n-1} = \begin{cases} (a_n - a_{n-1})x + b_n - b_{n-1} & if \ l_{n-1} = 1 \\ 0 & if \ l_{n-1} = 0 \end{cases}$$

$$y = z_1 + z_2 + \cdots + z_{n-1}$$

Convert to MILP formulation:

$$\begin{cases} D_1 l_1 \leq -(u_1 - x) + D_1 \\ (d_1 - \varepsilon) l_1 \leq (u_1 - x) - \varepsilon \end{cases}$$

$$\begin{cases} D_i l_i \leq -(u_i - x) + D_i \\ (d_i - \varepsilon) l_i \leq (u_i - x) - \varepsilon \end{cases}, \forall i \in \{2, \cdots, n - 1\}$$

$$l_i - l_j \leq 0 \quad \forall j < i, i = 2, \cdots, n - 1$$

Where

$$D_i = \max(u_i - x) = \max(u_i) - \min(x) = u_n - u_0$$

$$d_i = \min(u_i - x) = \min(u_i) - \min(x) = u_1 - u_n$$

$$(M_2 - m_1)l_1 - z_1 \leq -a_2 x + (M_2 - m_1 - b_2)$$
$$\left\{\begin{array}{l} (M_1 - m_2)l_1 + z_1 \leq a_2 x + (M_1 - m_2 + b_2) \\ (m_2 - M_1)l_1 - z_1 \leq -a_1 x - b_1 \\ (m_1 - M_2)l_1 + z_1 \leq a_1 x + b_1 \end{array}\right.$$

$$-M_n l_{n-1} + z_{n-1} \leq 0$$
$$m_n l_{n-1} - z_{n-1} \leq 0$$
$$\left\{\begin{array}{l} -m_n l_{n-1} + z_{n-1} \leq [(a_n - a_{n-1})x + (b_n - b_{n-1})] - m_n \\ M_n l_{n-1} - z_{n-1} \leq -[(a_n - a_{n-1})x + (b_n - b_{n-1})] + M_n \end{array}\right.$$

$$y \leq z_1 + z_2 + \cdots + z_{n-1}$$

$$y \geq z_1 + z_2 + \cdots + z_{n-1}$$

Where

$M_1 = \max(a_1 x + b_1)$, $m_1 = \min(a_1 x + b_1)$, where $x \in [u_0, u_n]$
$M_2 = \max(a_2 x + b_2)$, $m_2 = \min(a_2 x + b_2)$, where $x \in [u_0, u_n]$
$M_i = \max((a_j - a_{j-1})x + b_j - b_{j-1})$ , $m_1 = \min((a_j - a_{j-1})x + b_j - b_{j-1})$, where $x \in [u_0, u_n]$
Use $M = \max(M_i)$, $m = \min(m_i)$ to replace all $M_i$ and $m_i$

Models are also used for the production facilities 10 and other components of the system as part of determining the network flow solution.

Once the network flow solution has been determined, then the allocation mapping module 116 is operable to allocate production rates from each of the plurality of hydrogen production facilities to each of the plurality of delivery points based on predetermined criteria associated with the delivery points to define an allocation mapping for the hydrogen supply network.

In embodiments, this may comprise two optimizations: customer production rates allocation mapping and feedstock rate allocation mapping to the production facilities 10.

In embodiments, the allocation mapping module 116 may also apply additional constraints on allocation mapping. For example, the allocation mapping module 116 may incorporate constraints on the greenhouse gas intensity of hydrogen allocated to a particular delivery point.

In addition, the allocation mapping module 116 may apply relaxed boundaries to the constraint problems in specific circumstances. In embodiments, if it is determined by the allocation mapping module 116 that one or more constraints on the greenhouse gas intensity of hydrogen allocated to a delivery point cannot feasibly be met, the allocation mapping module 116 may apply alternative approaches to address the constraints.

In specific embodiments, if constraints set by the original network flow solution are not feasible, the allocation mapping module 116 may derive a new optimization comprising different parameters. In embodiments, the different parameters may comprise a relaxation of the original constraints of the determined network flow solution.

In embodiments, the new optimization may comprise generating a different objective function to minimize a function of constraint violations. In embodiments, the new objective function may be configured to minimize a weighted norm of violations of the constraints on the greenhouse gas intensity of hydrogen across all delivery points. In embodiments, the weighted norm may be a 1-norm or a 2-norm. A 2-norm is, in embodiments, preferred because this would spread the cost of CI constraint violations across multiple customers, whereas a 1-norm would focus the cost of violations on one or a small number of customers.

In addition to production rates, the allocation mapping module 116 is further configured to determine the rate of a low-carbon or renewable feedstock to one or more of the production facilities 10.

In embodiments, low-carbon or renewable feedstocks comprise landfill gas, renewable natural gas from wastewater treatment, renewable natural gas from municipal food waste, captured methane from coal mines, renewable electricity produced from solar energy, renewable electricity produced from wind energy, or renewable hydro-electricity.

As a result, in embodiments the allocation mapping module 116 may handle three coupled optimizations: 1) calculating the network flow solution, 2) allocation mapping of production rates to consumption rates, and 3) determining the rate of a low-carbon or renewable feedstock to one or more of the hydrogen production facilities. In embodiments, these optimizations may be handled in a single coupled process where the network flow solution and allocation mapping is carried out in a coupled

*PRODUCTION CONTROL MODULE*

118The production control module 118 is configured to generate a signal operable to enable control the production rates of the production facilities 10 based on the allocation mapping defined by the allocation mapping module 116.

The production control module 118 may use any suitable algorithm or technique to generate control setpoint values to enable adjustment of the production rates of the production facilities 10 in real time according to the changes in the network conditions and demands. The production control module 118 may also communicate with the production facilities 10 and the delivery points 20 to coordinate and synchronize their operations.

In embodiments, the production control module 118 may further comprise control elements operable to provide control signals (e.g. control setpoints) to the process controller 130 to control one or more control elements 10-1C, 10-2C, 10-3C, 10-4C of the process controller 130. In embodiments, the production control module 118 is operable to generate production facility 10-1, 10-2, 10-3, 10-4 rates which are communicated to the process controller 130.

The production control module 118 is operable to communicate with process controller 130 as described below.

The data acquisition module 120 is configured to collect data on the hydrogen production, distribution, and consumption from various sources within the network N. This includes from the sensor block 140 as described below.

The data acquisition module 120 may use any suitable sensors, meters, or devices that can measure and transmit relevant data on the network operations and performance. The data acquisition module 120 may also communicate with the carbon intensity determination module 114, the allocation mapping module 116, and the production control module 118 to provide them with the necessary data for their functions.

The data communication module 122 is configured to communicate the optimized consignment information to the relevant parties within the network N. The data communication module 12 may use any suitable communication protocols or channels that can transmit and receive information securely and reliably. The data communication module 122 may also communicate with external entities, such as regulators, verifiers, or customers, to report and verify the carbon intensity of hydrogen consignments.

Finally, in embodiments, the controller 110 may comprise a data input module 138 operable to receive and process sensor data and other data inputs from the data input block 120.

The control system 100 comprises the process controller 130 which comprises a plurality of control elements 10-1C, 10-2C, 10-3C, 10-4C ... 10-nC associated with at least some of the production facilities 10-1, 10-2, 10-3, 10-4 ... 10-n.

In embodiments, the parameters controlled by the process controller 130 may include operation rate of the hydrogen production process in question, type of power supply, amount of power, ramp rates, throughput rate of materials (e.g. feedstocks, intermediates, and fuels to produce hydrogen). These parameters are regulated by the control elements/control systems 10-1C, 10-2C, 10-3C, 10-4C ... 10-nC associated with at least some of the production facilities 10-1, 10-2, 10-3, 10-4 ... 10-n.

Control systems typically maintain a control setpoint (e.g. a throughput or flow setpoint) and are associated with one or more sensors (such as, in non-limiting examples, flow rate meters, pressure sensors, temperature sensors etc.) and actuators (such as, in non-limiting examples, pumps, valves, compressors, or blowers) to regulate the throughput of materials through the process. These systems may comprise any suitable controller, for example, proportional-integral-derivative (PID) controllers.

Each production process of the production facilities 10-1, 10-2, 10-3, 10-4 will, in practice, have a maximum and minimum operational capacity. In general, in a dynamic operation a maximum rate of change will apply (this corresponds to the ramp rate). These constraints are typically set by safety, mechanical, electronic, material or other physical constraints within the equipment.

The difference between the maximum and minimum operating points defines the range of operation. Process constraints place constraints on the maximum and minimum capacity for each process, together with constraints on the rate of change of production capacity (i.e. ramp rates) in response to controller set point changes. Physical equipment limitations, quality and/or safety parameters may also apply.

The above limitations may be determined by the process controller 130 and the process(es) controlled by a throughput setpoint value either determined locally or provided by the module 118 of the controller 110.

In embodiments, the production facility 10-1, 10-2, 10-3, 10-4 rate values determined by the process control module 118 are provided to the process controller 130 which is operable to control the production facilities 10-1, 10-2, 10-3, 10-4 dynamically (through control elements 10-1C, 10-2C, 10-3C, 10-4C ... 10-nC) in response to this data.

In specific embodiments, the process controller 130 comprises a model predictive control (MPC) system. In embodiments, the MPC system comprises a multivariable control algorithm that utilizes an internal dynamic model of the production facility 10-1, 10-2, 10-3, 10-4 components, an appropriate cost function, and an optimization algorithm. In embodiments, the optimization algorithm is operable to minimize the cost function using a plurality of control inputs to control elements 10-1C, 10-2C, 10-3C, 10-4C ... 10-nC.

However, in embodiments, alternative functions may be used. These may involve, for example, similarity functions which are maximized.

The process controller 130 is arranged to receive production facility 10-1, 10-2, 10-3, 10-4 rate values determined by the process control module 118 and derive a production facility 10-1, 10-2, 10-3, 10-4 operation policy including set point operation parameters over a predetermined future time horizon. These are then fed to the control elements 10-1C, 10-2C, 10-3C, 10-4C ... 10-nC to control the relevant processes controlled thereby. In embodiments, it may utilize linear empirical models obtained by system identification of the various processes.

Alternatively or additionally, in embodiments, it may utilize non-linear high-fidelity models or non-linear models created from a machine learning algorithm. The process controller 130, knowing the desired production facility 10-1, 10-2, 10-3, 10-4 rates, may utilize the MPC system to optimize the control set points and processes for a present time period, whilst also being able to adapt for future time periods. This is achieved, in embodiments, by optimizing a finite time horizon for the processes whilst implementing the current time period. The optimization is then performed again at the next time period for another finite time horizon.

The control system 100 may, in embodiments, further comprise a data input block 140 arranged to receive inputs from particular sensors or other components in the hydrogen supply network N.

In embodiments, the production facilities 10-1, 10-2, 10-3, 10-4 comprise one or more sensors 10-1S, 10-2S, 10-3S, 10-4S of the sensor block 140. These sensors 10-1S, 10-2S, 10-3S enable reporting of process parameters, for example, in embodiments, the production rate of hydrogen for the various production facilities 10-1, 10-2, 10-3, 10-4.

In addition, other data input elements 10-nS may be provided as required. These data input elements are not limited to sensors and sensor data and may include reporting or determined technical values on additional elements of the network N.

In embodiments, this may include technical information relating to production information, availability or CI values of fuels and processes, amongst others. In general, data input elements 10-1S, 10-2S, 10-3S, 10-4S may also include reporting of the Carbon Intensity output from a given process or step in the supply network N.

In embodiments, the present invention provides a control system 100 operable to enable selective control of processes within the hydrogen supply network N to achieve predetermined outcomes when operating the hydrogen supply network N.

It will be understood that the above terms "module", "block" and "element" are non-limiting terms and do not necessarily imply any interconnection or grouping between the component parts of the systems 100, 110, 130, 140 which may be illustrated in a common grouping for clarity purposes only.

The low-carbon hydrogen supply system may further comprise a network comprising means for storing and transporting hydrogen between the production facilities and the delivery points. The means for storing and transporting hydrogen may include any suitable infrastructure or equipment that can store and transport low-carbon hydrogen safely and efficiently, such as pipelines, tanks, trucks, ships, or any combination thereof.

In some embodiments, at least one delivery point 120 may be operable to provide hydrogen as a feedstock or fuel to at least one production facility 110. For example, a delivery point may be a power plant that uses hydrogen for electricity generation and provides excess hydrogen to a production facility that uses hydrogen for gasification or reforming. In such cases, hydrogen may be provided to a delivery point operable to provide hydrogen as a feedstock or fuel to a production facility only if the carbon intensity of the inventory depletion rate is greater than the carbon intensity limits for all other delivery points. This may ensure that low-carbon hydrogen is prioritized for other delivery points that have stricter carbon intensity constraints.

The low-carbon hydrogen supply system according to the present invention provides several advantages over conventional systems. In embodiments, the system is operable to monitor and control the real-time production, distribution, and consumption of hydrogen consignments according to their carbon intensity and origin.

In addition, the system and method can facilitate the delivery of hydrogen consignments to different delivery points and compliance with their respective carbon intensity constraints when ex post facto (hindsight) calculations and optimizations are performed.

Further, the system can optimize the allocation and identification of hydrogen consignments based on various criteria, such as demand, sustainability, cost, and carbon intensity.

It can adjust dynamically to changes in network conditions and demands. It can harmonize and reconcile different rules and requirements for low-carbon hydrogen across different regions and markets. It can reduce GHG emissions and environmental impacts associated with hydrogen production and consumption.

It can increase efficiency and reliability of low-carbon hydrogen supply, and it can provide transparency and accountability in low-carbon hydrogen market

In embodiments, other outcomes may be to ensure the CI value is met whilst meeting consumer demand and ensuring efficient and safe operation of the plant processes and facilities, avoiding the need for shutdowns and/or operation outside of normal parameters.

*METHOD*

Figure 3 shows a method 200 according to an embodiment. In embodiments, there is provided a method operable to provide real-time control of one or more industrial processes in a hydrogen supply network. More particularly, the present invention relates to a method for the control of one or more industrial processes in a hydrogen supply network in order to meet carbon intensity (CI) constraints.

The method is implemented on a computer system utilizing at least one hardware processor 112 and receives inputs from the data input block 140 amongst others.

*STEP 210: DETERMINE GHG INTENSITY FOR PRODUCTION FACILITIES 10*

. At step 210, the control system determines the relationship between the plant production rates and the greenhouse gas intensity of hydrogen produced at one or more production facilities 10-1, 10-2, 10-3, 10-4.

In specific embodiments, the carbon intensity determination module 114 determines the carbon intensity of hydrogen produced at the production facilities 10-1, 10-2, 10-3, 10-4 using one or more computational models configured to allocate greenhouse gas emissions to coproducts using one or more of: 1) mass allocation, 2) molar allocation, 3) energy-basis allocation, or 4) economic allocation. In embodiments, the parameters of computational models may be established by statute.

In specific embodiments, one or more life-cycle analysis (LCA) models may be utilized. LCA comprises analytical methods for estimating the aggregate quantity of greenhouse gases emitted during a full fuel life cycle. The carbon intensity determined from one or more production facilities 10-1, 10-2, 10-3, 10-4 may include, for example, the direct effects resulting from producing and using the fuel, together with any indirect effects associated with the fuel.

In non-limiting embodiments, direct effects may comprise feedstock generation or extraction, feedstock conversion to a final fuel or fuel mixture, distribution, storage, delivery, and final use of the finished fuel by the end user.

As noted, a low carbon fuel standard (LCFS) carbon intensity expresses the combined atmospheric heat-trapping effect of five GHGs: $CO_2$, methane ($CH_4$), nitrous oxide ($N_2O$), volatile organic compound (VOC), and carbon monoxide (CO). Because these gases are not equivalent in terms of their ability to trap atmospheric heat, they are standardized to the heat-trapping capability of $CO_2$.

The LCA models may incorporate any suitable allocation methodologies and may be parameterized using values obtained from a regulation or an external model.

Alternatively or additionally, the step of determining may utilize LCA models comprising surrogate models. Surrogate models comprise approximate mathematical models to generate CI values from the LCA models. These may include any suitable surrogate model (such as for Open LCA, for example). In specific embodiments, the surrogate LCA models may be Microsoft Excel-based.

In embodiments, the step of determining may comprise utilizing models which include one or more of: linear, rational, or bilinear functions as a function of plant decision variables. In embodiments, plant decision variables may comprise any suitable control variable such as production rate, steam rate, low carbon feedstock utilization etc.

In specific embodiments, the step of determining may comprise utilizing a computational model or models which express carbon intensity as bilinear functions of variables representative of plant operating conditions. In specific embodiments, the plant operating conditions comprise: hydrogen production rates; steam production rates; and consumption rates of feedstocks (such as low carbon feedstocks).

In embodiments, the step of determining may comprise utilizing models which derive expressions for carbon intensity which are dependent upon one or more operational parameters of the production facilities 10-1, 10-2, 10-3, 10-4.

In embodiments, CI values may be dependent on control variables such as plant rates because plant efficiencies may have a dependence upon plant rates. In other words, the carbon intensity models may comprise variables and/or parameters which capture the effects of the operating conditions of the hydrogen production facilities on the carbon intensity of the hydrogen.

In embodiments, the step of determining may further comprise modelling the impact of plant rates on efficiencies through model parameters. In embodiments, this may be achieved through the use of one or more of: linear models; Box-Jenkins (BJ) models; piecewise linear models; and multivariate models. In other words, the carbon intensity models may comprise expressions for carbon intensity are derived from other models which capture the efficiency of the production facilities 10-1, 10-2, 10-3, 10-4 as a function of the operating conditions of the production facilities 10-1, 10-2, 10-3, 10-4.

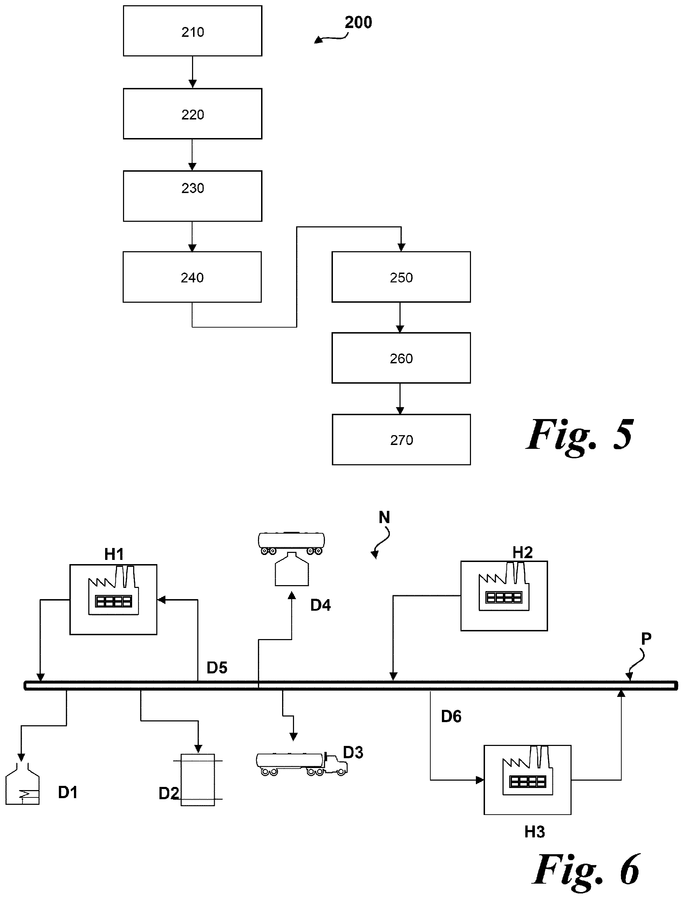

A schematic of the functionality of the carbon intensity determination module 114 is shown in Figure 6. The module 114 indicates typical exemplary inputs, outputs and data processing pathways needed to determine the relationship between carbon intensity and production facility 10 production rates.

In embodiments, the carbon intensity determination module 114 receives real-time operating data from the production facilities 10 as inputs.

In embodiments, the real-time operating data may comprise one or more of: rate of feedstock input into the production facility 10; rate of energy input into the production facility 10; rate of hydrogen output from the production facility 10; and rate of carbon dioxide captured and sequestered from the production facility 10.

In specific non-limiting embodiments, consider an example of a blue hydrogen plant. In this scenario, the real-time operating data for greenhouse gas intensity calculations may comprise one or more of: the flow rate of natural gas supplied to the production facility; the flow rate of hydrogen produced by the facility; the rate of electricity supplied to the facility; and the rate of carbon dioxide captured and sequestered from the facility.

In addition, additional empirical and regulatory data may be utilized in the calculation. This data may include, but is not limited to, distribution data such as trucking and shipping, LCA model parameters, regulation data and contracts including volumes and pricing for feedstocks and/or energy.

Once the carbon intensity relationship is determined at step 210, the method proceeds to step 210.

*STEP 220: DETERMINE NETWORK FLOW SOLUTION*

At step 220, the controller 110 determines a network flow solution. The step of determining a network flow solution for the hydrogen supply network comprises determining a network flow solution specifying overall production rates for the plurality of hydrogen production facilities in the network and delivery rates for the plurality of hydrogen delivery points in the network. This determines a network flow solution space which satisfies one or more predetermined constraints.

The network flow solution comprises one or more of: production rates for production facilities; feedstock consumption rates; delivery rates to delivery points; inventory depletion rates; inventory accrual rates; and allocation mappings between production facilities and delivery points.

In embodiments, the network flow solution is calculated by formulating a mathematical optimization problem. In non-limiting specific embodiments this may be implemented in Python and Gurobi.

Input parameters may comprise the relationship between carbon intensity and production rate for the production facilities 10 determined in step 210.

Input parameters for the mathematical optimization problem may further comprise one or more upper and lower values of specific conditions that must be satisfied in the solution. In embodiments, the one or more predetermined constraints are selected from the groups of: customer demand constraints; and hydraulic constraints.

These may comprise: upper and lower bounds on production rates at plants; lower and upper bounds n delivery rates to delivery points; and upper limits on carbon intensities at delivery points; upper bounds on a rate of inventory withdrawal; and upper bounds on a rate of inventory accrual.

Further inputs may include mathematical determinations of whether particular parameters have been satisfied or mathematical functions related to the network N. These may include one or more of: Boolean indications of whether the hydrogen produced at each production facility qualifies as an RFNBO; Boolean indications of whether the hydrogen delivered to each delivery point is required to qualify as an RFNBO; and long-term weighted moving averages of the greenhouse gas intensity allocated to each delivery point; and the long-term weighted moving average of the greenhouse gas intensity of hydrogen inventory allocated to inventory accrual.

The mathematical optimization problem is formulated and solved to produce a flow solution that satisfies all of the lower and upper bounds defined above. In embodiments, the step of determining a network flow solution comprises bounding one or more flow rates on an edge in a digraph representing a pipe segment.

It is then necessary to model the pressure drop across the pipe segment. If the flow is bi-directional, then for computational efficiency the pressure drop relationship is linearized.

However, if the represented pipe segment has flow along the corresponding edge that can flow only in a single direction, then the pressure drop can be modelled more comprehensively. In embodiments, this is achieved by bounding the pressure drop by a piecewise linear constraint. In embodiments, this is defined and solved as a set of piecewise linear convex inequalities.

A detailed mathematical optimization for a pipe segment is illustrated above in relation to the allocation mapping module 116 description above.

Once the flow solution has been generated, the method proceeds to step 230.

*STEP 230: SET ALLOCATION MAPPINGS*

At step 230, data generated in the network flow solution in step 220 is utilized by the allocation mapping module 116 to define one or more allocation mappings. This step involves allocating production rates from each of the plurality of hydrogen production facilities to each of the plurality of delivery points based on predetermined criteria associated with the delivery points to define an allocation mapping for the hydrogen supply network.

In embodiments, the step of allocating mappings may comprise two optimizations: customer product rate allocation mapping and feedstock allocation mapping to production facilities.

In embodiments, the step of allocating production rates may also comprise applying additional constraints on allocation mapping. For example, the allocation mapping module 116 may incorporate constraints on the greenhouse gas intensity of hydrogen allocated to a particular delivery point.

In addition, the step of allocating may, in embodiments, comprise applying relaxed boundaries to the constraint problems in specific circumstances. In embodiments, if it is determined by the allocation mapping module 116 that one or more constraints on the greenhouse gas intensity of hydrogen allocated to a delivery point cannot feasibly be met, the allocation mapping module 116 may apply alternative approaches to address the constraints.

In specific embodiments, if in the step of allocating it is determined that the constraints determined as part of the original network flow solution are not feasible, the method may further comprise deriving a new optimization comprising different parameters. In embodiments, the different parameters may comprise a relaxation of the original constraints of the determined network flow solution.

In embodiments, the step of allocating may comprise deriving a new optimization comprising a different objective function to minimize a function of constraint violations. In embodiments, the new objective function may be configured to minimize a weighted norm of violations of the constraints on the greenhouse gas intensity of hydrogen across all delivery points. In embodiments, the weighted norm may be a 1-norm or a 2-norm. A 2-norm is, in embodiments, preferred because this would spread the cost of the violations across multiple customers, whereas a 1-norm would focus the cost of violations on one or a small number of customers.

In addition to allocating production rates, the step of allocating may further comprise determining a rate of a low-carbon or renewable feedstock to each of one or more of the production facilities 10.

In embodiments, low-carbon or renewable feedstocks comprise landfill gas, renewable natural gas from wastewater treatment, renewable natural gas from municipal food waste, captured methane from coal mines, renewable electricity produced from solar energy, renewable electricity produced from wind energy, or renewable hydro-electricity.

As a result, in embodiments the determining and allocation steps 220, 230 may comprise three coupled optimizations: 1) calculating the network flow solution, 2) allocation mapping of production rates to consumption rates, and 3) determining the rate of a low-carbon or renewable feedstock to one or more of the hydrogen production facilities.

In specific embodiments, the allocation mappings defined in step 230 meet four criteria as described below.

First, the allocation mappings for a given delivery point, summed across all of the production facilities 10 and inventory depletion is required to be equal to the setpoint for hydrogen to be supplied to the delivery point.

For the above determination, all allocation mappings for the given delivery point must be non-negative, and the inventory depletion is determined as the maximum of zero and the sum of setpoints for delivery rates at delivery points minus the sum of setpoints for production rates at production facilities.

Secondly, the sum of allocation mappings for a given production facility 10 across all delivery points 30 and inventory accrual must be less than or equal to the rate of hydrogen produced by the facility, where the inventory accrual calculated as the maximum of zero and the sum of production rates at production facilities minus the sum of delivery rates at delivery points.

Thirdly, for each delivery point 30 which is characterized as a hydrogen end-use point (and which is not characterized as a production point), the only allocation mappings which are non-zero are specified as those for which the associated production point has a carbon intensity lower than a carbon intensity limit associated with the delivery point 30.

This condition ensures that when consignments of hydrogen are finalized at the end of a regulatory period, each consignment will satisfy the upper bound on the greenhouse gas intensity in order to meet requirements for incentives for low carbon hydrogen.

Fourthly, for each delivery point which is characterized as a production point, any allocation mapping may be non-negative provided that exactly one of the following conditions hold:

1) The weighted average greenhouse gas intensity of the hydrogen in the allocation mapping for the delivery point is less than a greenhouse gas intensity bound associated with the delivery point; or

2) The weighted average greenhouse gas intensity of the hydrogen in the allocation mapping for the delivery point is greater than a greenhouse gas intensity bound associated with the delivery point but the long-term weighted average of the allocation mapping for the delivery point is less than the greenhouse gas intensity bound.

This condition ensures that when consignments of hydrogen are finalized at the end of a regulatory period, each consignment will satisfy the upper bound on the greenhouse gas intensity in order to meet requirements for incentives for low carbon hydrogen.

It is possible that in a real-time system, an allocation mapping does not exist which satisfies all the constraints listed above. In this situation, the allocation mapping module 116 will provide a mapping which minimizes the violation of constraints listed above and indicate which constraints could not be satisfied.

In embodiments, steps 220 and 230 may be computed simultaneously by solving a coupled optimization problem. When the allocation mapping and network flow solution are computed simultaneously, the problems are coupled with the constraint that $\sum_i q_{ij} d_j = p_i$, where $d_j$ is the rate of delivery to delivery point j and $p_i$ is the production rate at production facility i, the variables $p_i$ being computed as part of the network flow solution.

In embodiments, the allocation mapping module 116 is operable to create allocation mappings using a set of variables q_i_j representing the fraction of total product delivered to delivery point j which is allocated from production facility i, such that for a given delivery point j the sum of q_i_j overall production facilities i is equal to one.

In embodiments, for at least one delivery point j the determination of an allocation mapping satisfies constraint that the sum over production facilities i of products of attribute terms a_i and q_i_j is less than constraint limit c_j.

In specific embodiments, the attributes terms a_i comprise greenhouse gas intensities for hydrogen produced at a production facility I and c_j comprises an upper bound on the greenhouse gas intensity of hydrogen supplied to delivery point j.

In embodiments, delivery may be made to delivery points which do not require the above constraints. For example, there may be existing hydrogen supply networks where delivery points such as oil refineries are not required to meet a specific carbon intensity requirement. Therefore, in these cases, there is no need to allocate hydrogen having a greenhouse gas intensity below an indicated threshold to these delivery points.

However, unbounded scenarios such as this can be problematic in optimization problems. In addition, in the interests of fairness across these types of delivery points, it is desired that the allocated attributes of hydrogen supplied to these delivery points do not differ substantially from one another and as a function of time.

As a result, in embodiments, at least two delivery points are absent the constraint that the sum over production facilities i of products of attribute terms a_i and q_i_j is less a constraint limit c_j. This situation holds for many delivery points such as oil refineries described above.

In these situations, it is desirable that the allocated attributes be relatively stable over time and not differ materially from one delivery point to another. To enhance attribute stability and ensure equitable allocation of attributes, in embodiments an alternative equitable constraint is applied such that for any delivery points k and m not having an attribute constraint, the allocation mapping satisfies q_i_k = q_i_m for all production facilities i, ensuring that the attributes of hydrogen delivered to delivery points k and m are equal.

This has numerous benefits. For example, absent the stability-promoting constraint q_i_k = q_i_m, the q variables would be unconstrained by any specified constraints. As a result, the mathematical problem for computing the allocation mapping would be underdetermined. It is well known that the solution of underdetermined mathematical optimization problems can be numerically unstable, and therefore the carbon intensity attributes allocated to a customer could fluctuate substantially from one computation period to the next. In embodiments, this aspect of the invention avoids these issues.

*STEP 240: ADJUST PRODUCTION RATES*

At step 240, the production rates of the production facilities 10 can be adjusted to control production in accordance with the determined allocation mapping.

The control system 110 is operable to adjust the production rate at each production facility by generating a setpoint value for the production rate of each production facility 10 and communicating the setpoint value to each respective production facility 10.

The setpoint value(s) are calculated by the network flow solution to ensure consistency with the determined allocation mappings and greenhouse gas intensity constraints.

In embodiments, step 240 comprises generating, based on the network flow solution and allocation mapping, control variables for controlling the production rates of each of the plurality of hydrogen production facilities.

The production rate values may be determined by the process control module 118 and may be provided to the process controller 130 which is operable to control the production facilities 10-1, 10-2, 10-3, 10-4 dynamically (through control elements 10-1C, 10-2C, 10-3C, 10-4C ... 10-nC) in response to this data.

In specific embodiments, the generated control variables for control of production rates may be utilized in a model predictive control (MPC) system. In embodiments, the MPC system comprises a multivariable control algorithm that utilizes an internal dynamic model of the production facility 10-1, 10-2, 10-3, 10-4 components, an appropriate cost function, and an optimization algorithm. In embodiments, the optimization algorithm is operable to minimize the cost function using a plurality of control inputs to control elements 10-1C, 10-2C, 10-3C, 10-4C ... 10-nC.

However, in embodiments, alternative functions may be used. These may involve, for example, similarity functions which are maximized.

In embodiments, controlling the plurality of hydrogen production facilities in accordance with the values of the control variables may comprise receiving, by the process controller 130, production facility 10-1, 10-2, 10-3, 10-4 rate values determined by the process control module 118 and deriving a production facility 10-1, 10-2, 10-3, 10-4 operation policy including set point operation parameters over a predetermined future time horizon. Control is then effected through the control elements 10-1C, 10-2C, 10-3C, 10-4C ... 10-nC to control the relevant processes controlled thereby. In embodiments, this process may utilize linear empirical models obtained by system identification of the various processes.

Alternatively or additionally, in embodiments, the process may utilize non-linear high-fidelity models or non-linear models created from a machine learning algorithm. The process controller 130, knowing the desired production facility 10-1, 10-2, 10-3, 10-4 rates, may utilize the MPC system to optimize the control set points and processes for a present time period, whilst also being able to adapt for future time periods. This is achieved, in embodiments, by optimizing a finite time horizon for the processes whilst implementing the current time period. The optimization is then performed again at the next time period for another finite time horizon.

*STEP 250: ADJUST DELIVERY RATES OF HYDROGEN TO DELIVERY POINTS*

At step 250, the delivery rates for each delivery point 30 can be adjusted to control delivery in accordance with the determined allocation mapping.

The control system 110 is operable to adjust the delivery rate, the target delivery rate having been calculated by the network flow solution in a way that is consistent with allocation mappings and greenhouse gas intensity constraints. This may be done in accordance with the plant production rate control outlined above in step 240.

The setpoint value(s) are calculated by the network flow solution to ensure consistency with the determined allocation mappings and greenhouse gas intensity constraints.

*STEP 260: CALCULATE A LONG-TERM WEIGHTED MOVING AVERAGE OF HYDROGEN ALLOCATED TO DELIVERY POINTS*

The control system 110 is functional to calculate a long-term weighted moving average of hydrogen allocated to each delivery point 30.

In non-limiting embodiments, this long-term weighted moving average of hydrogen allocated to a delivery point 30 is calculated as the sum over each time increment of the sum over each production point times of the allocation mapping between the production point and the delivery point times the greenhouse gas intensity of the production point.

As noted above, the long-term weighted moving average of hydrogen allocated a delivery point may be used in certain circumstances to determine whether it the control system may find a network flow solution such that the weighted average greenhouse gas intensity of the hydrogen in the allocation mapping for the delivery point is greater than a greenhouse gas intensity bound associated with the delivery point.

*STEP 270: CALCULATE A WEIGHTED-MOVING AVERAGE OF HYDROGEN ALLOCATED TO INVENTORY*

The control system is functional to calculate a weighted moving average of hydrogen allocated to inventory. In an exemplary embodiment of the invention, this long-term weighted moving average of hydrogen allocated to inventory is calculated as the sum over each time increment of the sum over each production point times of the allocation mapping between the production point and inventory accrual multiplied by the greenhouse gas intensity of the production point, divided by sum over each time increment of the sum over each production point of the allocation mapping between the production point and the inventory accrual.

*OPERATIONAL EXAMPLE*

Figure 6 shows aspects of another exemplary embodiment of the invention and represents a hydrogen supply network N in the United Kingdom. The network N comprises a hydrogen pipeline distribution network P fed by three hydrogen production facilities H1, H2, H3. Two of the hydrogen production facilities H1, H3 are functional to receive and use recycled hydrogen from the pipeline network P. Hydrogen from the network P is supplied to four distribution points D1, D2, D3, D4.

In an exemplary embodiment, there are three hydrogen production facilities H1, H2, H3 that supply hydrogen to the pipeline distribution network P.

The first hydrogen production facility H1 comprises a blue hydrogen plant that produces hydrogen from natural gas. The greenhouse gas intensity of this hydrogen is typically in the range 15-20 gCO2e/MJ. The blue hydrogen plant is functional to accept recycled hydrogen from the pipeline distribution network.

Recycled hydrogen, when used, is combusted to generate steam for the autothermal reforming process that is used to produce the hydrogen. Hydrogen produced at the facility meets the standards of the United Kingdom Low Carbon Hydrogen Standard and qualifies for financial incentives under the United Kingdom Hydrogen Production Business Model.

The second hydrogen production facility H2 is a chlor-alkali plant that produces hydrogen as a coproduct. The greenhouse gas intensity of this hydrogen is typically in the range 5 - 35 gCO2e/MJ, which varies based on the percentage of renewable power that is provided to the facility.

Consignments of hydrogen produced at the chlor-alkali plant that have a greenhouse gas intensity of less than 20 gCO2e/MJ meet the standards of the United Kingdom Low Carbon Hydrogen standard and qualify for financial incentives under the United Kingdom Hydrogen Production Business Model.

The third hydrogen production facility H3 generates hydrogen by dissociating renewably produced ("green") ammonia. The greenhouse gas intensity of this hydrogen varies based on the % of grid power vs. % of renewable power used to produce the upstream green hydrogen and green ammonia and is typically in the range 5 - 10 gCO2e/MJ. The ammonia dissociation facility is functional to accept recycled hydrogen from the pipeline distribution network.

Recycled hydrogen, when used, is combusted in a furnace to supply heat to drive the endothermic chemical reaction which dissociates ammonia into hydrogen and nitrogen. Hydrogen produced at the facility meets the standards of the United Kingdom Low Carbon Hydrogen Standard and qualifies for financial incentives under the United Kingdom Hydrogen Production Business Model.

*DELIVERY POINTS*

There are six delivery points D1 - D6 in the United Kingdom exemplary network. The first delivery point D1 is for supply of low-carbon hydrogen to a fired heater at an oil refinery in the United Kingdom. The fired heater can accept a blend of natural gas, refinery fuel gas, and hydrogen in varying proportions.

Using low-carbon hydrogen from the hydrogen supply network reduces the quantity of natural gas that must be supplied to the fired heater, which reduces the direct emissions of greenhouse gases from the refinery and thereby lowers the tax obligations of the refinery under the United Kingdom emissions trading scheme (ETS). These tax benefits accrue regardless of the greenhouse gas intensity of the hydrogen supplied to the fire heater, and regardless of whether the hydrogen qualifies as a renewable fuel of non-biological origin (RFNBO).

The second delivery point D2 is for the supply of hydrogen to be used in a hydrocracker in an oil refinery in the United Kingdom. If the hydrogen supplied to the hydrocracker has a greenhouse gas intensity of less than 32.9 g CO2e/MJ and qualifies as a renewable fuel of non-biological origin (RFNBO), then that hydrogen supplied to the refinery applies to meet the obligations of the refinery operator under the UK Renewable Transport Fuel Obligation (RTFO).

The third delivery point D3 is for the supply of hydrogen for distribution via truck to fueling stations for Fuel Cell Electric Vehicles (FCEVs) in the United Kingdom. The additional greenhouse gas intensity associated with compression of the hydrogen for the tube trailer, distribution via truck, and station compression and cooling is 5.6 g CO2e/MJ. To qualify for credits under the UK RTFO, the total greenhouse gas intensity of hydrogen supplied to FCEVs must be less than 32.9 gCO2e/MJ. Therefore, an upper limit on the greenhouse gas intensity of hydrogen that can be supplied to the tube trailer is 32.9 - 5.6 gCO2e/MJ = 27.3 g CO2e/MJ.

The fourth delivery point D4 is for the supply of hydrogen to a liquefier. Once liquefied, the hydrogen is transported via truck to France, where it supplied to fueling stations for FCEVs. The hydrogen dispensed to FCEVs qualifies must be a Renewable Fuel of Non-Biological Origin (RFNBO) with a greenhouse gas intensity of less than 28.2 g CO2e/MJ in order to fulfill obligations under the European Union Renewable Energy Directive II regulations.

Renewable power is used to liquify the hydrogen and to dispense the hydrogen at the fueling station. However, there are incremental greenhouse gas emissions of magnitude 3 gCO2e/MJ associated with truck transport of the liquid hydrogen. Therefore, the greenhouse gas intensity of hydrogen supplied to the liquefier must be less than 28.2 - 3 g CO2e/MJ = 25.2 gCO2e/MJ, and the hydrogen must be produced from renewable energy sources of non-biological origin.

The fifth delivery point D5 is for the recycle of hydrogen back to the blue hydrogen production facility H1, where the hydrogen is used to produce steam for supply to the autothermal reforming reactor. Hydrogen used in this way reduces the greenhouse gas intensity of the hydrogen produced by the blue hydrogen facility, and also reduces the obligations of the blue hydrogen plant under the United Kingdom Emissions Trading Scheme because it offsets natural gas that would otherwise need to be used.

The sixth delivery point D6 is for the recycle of hydrogen back to the green ammonia dissociation facility, where the hydrogen is combusted to supply heat needed for the endothermic ammonia dissociation reaction. Hydrogen used in this way reduces the greenhouse gas intensity of the hydrogen produced by the green ammonia dissociation facility, and also reduces the obligations of the green hydrogen plant under the United Kingdom Emissions Scheme because it offsets natural gas that would otherwise need to be used.

*DISTRIBUTION NETWORK*

In the exemplary embodiment of the invention, there is a pipeline network P operable to distribute hydrogen from any of the three production facilities H1, H2, H3 to any of the six delivery points D1 - D6.

Furthermore, the pipeline network P has a substantial inventory of hydrogen. Hydrogen can be withdrawn from inventory when the control system 100 sets delivery rates to delivery points such that the sum of the delivery rates is less than the sum of production rates from the production facilities, thereby depleting inventory and lowering the average pressure of hydrogen in the pipeline network.

Hydrogen can be added to inventory when the control system 100 sets delivery rates to the delivery points D1 - D6 such that the sum of the delivery rates is greater than the sum of production rates from the production facilities H1, H2, H3, thereby accruing inventory and raising the average pressure of hydrogen in the pipeline network P.

*CONTROL SYSTEM*

In non-limiting embodiments of the invention, the hydrogen supply network N has a control system 100 that is operable to:

1) Calculate the greenhouse gas intensity of hydrogen produced at the three hydrogen production facilities H1, H2, H3.

2) Adjust the production rate of the three hydrogen production facilities H1, H2, H3.

3) Adjust the delivery rate of hydrogen to the six delivery points D1-D6.

4) Calculate allocation mappings between production rates at the three hydrogen production facilities H1, H2, H3 and inventory depletion and delivery rates to the six delivery points D1 - D6, and inventory accrual such that:

5) For a given hydrogen production facility H1, H2, H3, the sum over all delivery points D1 - D6 of allocation mappings for that hydrogen production facility H1, H2, H3 is equal to the production rate for the specific hydrogen production facility H1, H2, H3.

6) For a given delivery point D1-D6, the sum over all hydrogen production facilities H1, H2, H3 of allocation mappings for that delivery point is equal to the delivery rate for that delivery point D1 - D6.

7) For a delivery point D1- D6 that does not qualify as a hydrogen production facility H1, H2, H3, the only non-zero allocation mappings are those that correspond to a production facility having a greenhouse gas intensity less than the constraint on the maximum greenhouse gas intensity of hydrogen allocated that delivery point D1 - D6.

For a delivery point D1- D6:

1) Calculate a weighted moving average of hydrogen allocated to the delivery points D1-D6; and

2) Calculate a weighted moving average of hydrogen allocated to inventory.

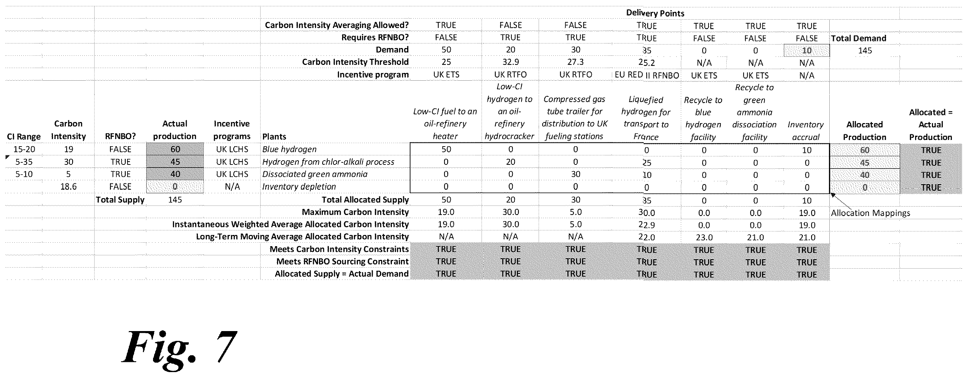

Figure 7 illustrates an operational example according to an embodiment. In this example, hydrogen is produced at three hydrogen production facilities H1, H2, H3 and supplied to four delivery points D1- D4.

In the first functional step of the control system, the greenhouse gas intensity for each of the three production facilities H1, H2, H3 is calculated. For the blue hydrogen plant H1, the greenhouse gas intensity is calculated using the flow rate of natural gas, the rate of consumption of electricity, the hydrogen production rate, and the rate of carbon dioxide capture and sequestration. The calculated greenhouse gas intensity for the blue hydrogen plant is 19 gCO2e/MJ.

For the chlor-alkali process H2, the greenhouse gas intensity is calculated using the rate of consumption of electricity and the rate of production of hydrogen. The greenhouse gas intensity for the chloralkaline plant is 30 g CO2e/MJ.

For the green ammonia dissociation plant H3, the carbon intensity is calculated using the flow rate of natural gas to the dissociation heater, the rate of consumption of electricity, the flow rate of hydrogen to the dissociation heater, and the flow rate of production hydrogen. In Case #1 of the exemplary embodiment, the greenhouse gas intensity of hydrogen produced from the dissociation of green ammonia is 5 gCO2e/MJ.

In the second functional step of the control system, a network flow solution is calculated using Python and Gurobi. The network flow solution satisfies bounds on the production rate at each of the hydrogen production facilities H1, H2, H3, bounds on the rate of delivery of hydrogen to each of the delivery points D1 - D4, and allocation mapping constraints.

First, the sum of allocation mappings for a given delivery point D1 - D4, over all hydrogen production facilities H1, H2, H3 and inventory depletion is equal to the setpoint for hydrogen to be supplied to the delivery point and all allocation mappings for the given delivery point D1 - D4 are nonnegative, with inventory depletion being calculated as the maximum of zero and the sum of setpoints for delivery rates at delivery points D1 - D4 minus the sum of setpoints for production rates at hydrogen production facilities H1, H2, H3.

For example, for the delivery point D4 for liquefied hydrogen for transport to France, the allocation mappings are 0 MMSCFD from the blue hydrogen plant H1, 25 MMSCFD from the chloralkaline plant H3, 10 MMSCFD from the dissociated green ammonia plant H2, and 0 MMSCFD from inventory depletion.

The setpoint for the rate of delivery of hydrogen for liquefied transportation to France is 35 MMSCFD. In accordance with the invention, all allocation mappings for this delivery point are nonnegative. Furthermore, the sum of allocation mappings for this delivery point is 0+25+10+0=35 MMSCFD which is equal to 35 MMSCFD setpoint for the rate of delivery of hydrogen to the delivery point D4.

Secondly, the sum of allocation mappings for a given hydrogen production facility H1, H2, H3 over all delivery points D1 - D4 and inventory accrual is less than or equal to the rate of hydrogen produced by the facility, with inventory accrual calculated as the maximum of zero and the sum of production rates at production facilities minus the sum of delivery rates at delivery points.

As an example, for the blue hydrogen plant H1 the allocation mappings are 50 MMSCFD to the oil refinery heater D1, 0 MMSCFD to the oil refinery hydrocracker D2, 0 MMSCFD to the tube trailer D3, 0 MMSCFD for liquefied transport to France D4, 0 MMSCFD for recycle to the blue hydrogen facility D5, 0 MMSCFD for recycle to the green ammonia dissociation facility D6, and 10 MMSCFD to inventory accrual. It is thus evident that the sum of allocation mappings for the blue hydrogen plant is 50+0+0+0+0+0+10=60 MMSCFD which is equal to the setpoint for production at the blue hydrogen facility.

Thirdly, for each delivery point D1-D4 which is characterized as a hydrogen end-use point, and which is not characterized as a production points, the only allocation mappings which are nonzero are those for which the associated production point has a greenhouse gas intensity lower than a greenhouse gas intensity limit associated with the delivery point.

This condition ensures that when consignments of hydrogen are finalized at the end of a regulatory period, each consignment will satisfy the upper bound on the greenhouse gas intensity in order to meet requirements for incentives for low carbon hydrogen. As an example, hydrogen delivered to the oil-refinery hydrocracker D2 does not qualify as a hydrogen production point.

The hydrogen delivered to this point must have a greenhouse gas intensity less than 32.9 gCO2e/MJ. As is indicated in Figure 7, the only nonzero allocation mapping is from the Chlor-Alkali plant, which has a greenhouse gas intensity of 30.0 gCO2e/MJ which is less than the threshold of 32.9 gCO2e/MJ.

Fourthly, for each delivery point D5, D6 which is characterized as a production point, any allocation mapping may be nonnegative provided that exactly one of the following conditions hold:

The weighted average greenhouse gas intensity of the hydrogen in the allocation mapping for the delivery point is less than a greenhouse gas intensity bound associated with the delivery point, or

The weighted average greenhouse gas intensity of the hydrogen in the allocation mapping for the delivery point is greater than a greenhouse gas intensity bound associated with the delivery point but the long-term weighted average of the allocation mapping for the delivery point is less than the greenhouse gas intensity bound.

As an example of this fourth condition, consider the delivery point D4 for the production of liquefied hydrogen for transport to France. Because the hydrogen changes state (from a gas to a liquid), this delivery point also qualifies as a production point. Note that the upper bound for the greenhouse gas intensity for this delivery point is 25.2 gCO2e/MJ.

The nonzero allocation mappings for liquefied hydrogen are 25 MMSCFD from the chloralkali plant, which has a greenhouse gas intensity of 30 gCO2e/MJ and 10 MMSCFD from the dissociated green ammonia plant, which has a greenhouse gas intensity of 5 gCO2e/MJ. While product allocated from the chloralkali plant has a carbon intensity which exceeds the upper bound of 25.2 gCO2e/MJ, the weighted average carbon intensity is [(30 gCO2e/MJ)*(25 MMSCFD)+(5 gCO2e/MJ)*(10 MMSCFD)]/(25 + 10 MMSCFD)=22.9 gCO2e/MJ which is less than the greenhouse gas intensity threshold of 25.2 gCO2e/MJ.

In the third functional step of the control system 100, allocation mappings are set based on the network flow solution. In this case, there is an allocation mapping of 50 MMSCFD from the blue hydrogen plant to the oil refinery heater, 20 MMSCFD from the chloralkali plant to the oil refinery hydrocracker, 30 MMSCFD from the dissociated green ammonia plant to the hydrogen liquefier, 25 MMSCFD from the chloralkali plant the hydrogen liquefier, 10 MMSCFD from the dissociated green ammonia plant to the hydrogen liquefier, and 10 MMSCFD from the blue hydrogen plant to inventory accrual.

These allocation mappings are written to a database so that they may be used in the calculation of the long-term moving average for greenhouse gas intensity of accrued inventory and the long-term moving average for the allocated carbon intensity for each of the delivery points.

In the fourth functional step of the control system, production rates setpoints are transmitted to the hydrogen production facilities H1, H2, H3. Specifically in this case, a production setpoint of 60 MMSCFD is provided for the blue hydrogen plant H1, a production rate of 45 MMSCFD is provided for the chloralkali plant H2, and a production rate of 40 MMSCFD is provided for the dissociated green ammonia plant H3.

In the fifth functional step of the control system, delivery rate setpoints are provided.

It will be appreciated by the person of skill in the art that various modifications may be made to the above-described examples without departing from the scope of the invention as defined by the appended claims.

While the invention has been described with reference to the preferred embodiments depicted in the figures, it will be appreciated that various modifications are possible within the spirit or scope of the invention as defined in the following claims.

For example, whilst some of the above exemplary embodiments have been described in the context of a hydrogen supply network for supplying hydrogen fuel, the invention is not so limited. The invention is equally applicable to the process of providing hydrogen having a defined carbon intensity value to an end user location for purposes other than as a fuel. In other words, in embodiments, the hydrogen supply network may be considered to be a hydrogen supply network for the supply of hydrogen for any suitable purpose.

It will be understood that the term "control " as used herein may, in embodiments, refer to a systematic plan or set of actions designed to manage and optimize the operation of one or more hydrogen production facilities, in order to produce hydrogen with a defined carbon intensity value, while considering factors such as feedstock carbon intensity, demand data, and process constraints.

It will be understood that the term "control" as used herein may refer to the management and regulation of the operations of the processing plants, ensuring that the production of hydrogen and/or hydrogen fuel adheres to the defined carbon intensity value and other constraints set by the optimization model.

It will be understood that the term " fuel" as used herein may refer to any type of fuel used to power processes (including industrial processes) for turning stored fuel energy into useful work. The term "fuel" used herein may include, but is not limited to, "transportation fuels" used to power vehicles for the purpose of facilitating the movement of people or goods.

It will be understood that the term "Defined carbon intensity (CI) value" as used herein may refer to a predetermined or specified value for the greenhouse gas emissions associated with the production, processing and distribution of a product such as hydrogen or hydrogen fuel, expressed in terms of mass of carbon dioxide equivalent per unit of energy, and used as a target or constraint in the optimization process for producing the fuel in an environmentally sustainable manner.

In this specification, unless expressly otherwise indicated, the word "or" is used in the sense of an operator that returns a true value when either or both of the stated conditions are met, as opposed to the operator "exclusive or" which requires only that one of the conditions is met. The word "comprising" is used in the sense of "including" rather than to mean "consisting of".

Where applicable, various embodiments provided by the present disclosure may be implemented using hardware, software, or combinations of hardware and software. Also, where applicable, the various hardware components and/or software components set forth herein may be combined into composite components comprising software, hardware, and/or both without departing from the spirit of the present disclosure. Where applicable, the various hardware components and/or software components set forth herein may be separated into sub-components comprising software, hardware, or both without departing from the scope of the present disclosure. In addition, where applicable, it is contemplated that software components may be implemented as hardware components and vice-versa.

Software, in accordance with the present disclosure, such as program code and/or data, may be stored on one or more computer readable mediums. It is also contemplated that software identified herein may be implemented using one or more general purpose or specific purpose computers and/or computer systems, networked and/or otherwise. Where applicable, the ordering of various steps described herein may be changed, combined into composite steps, and/or separated into sub-steps to provide features described herein.

While various operations have been described herein in terms of "modules", "units" or "components," these terms should not limited to single units or functions. In addition, functionality attributed to some of the modules or components described herein may be combined and attributed to fewer modules or components.

It will be apparent to those of ordinary skill in the art that changes, additions or deletions may be made to the disclosed embodiments without departing from the spirit and scope of the invention. For example, one or more portions of methods described above may be performed in a different order (or concurrently) and still achieve desirable results.

**Claims**

**1.** A computer-implemented method of operating a hydrogen supply network responsive to carbon intensity (CI) requirements, the hydrogen supply network comprising a plurality of hydrogen production facilities and a plurality of hydrogen delivery points, the method being executed by at least one hardware processor and comprising:

a) determining, using a computer system, the CI for hydrogen produced at the plurality of hydrogen production facilities;

b) determining, using a computer system, a network flow solution for the hydrogen supply network, the network flow solution defining a network solution space specifying a range of values for production rates of the plurality of hydrogen production facilities in the network and a range of values of delivery rates for the plurality of hydrogen delivery points in the network which satisfy a plurality of predefined operational constraints of the hydrogen supply network;

c) allocating, using a computer system and within the determined network solution space, production rates from each of the plurality of hydrogen production facilities to each of the plurality of delivery points based on predetermined criteria associated with the delivery points to define an allocation mapping for the hydrogen supply network;

d) generating, using a computer system and based on the allocation mapping, control variables for controlling the production rates of each of the plurality of hydrogen production facilities; and

e) controlling the plurality of hydrogen production facilities in accordance with the generated control variables.

2. The computer-implemented method of claim 1, wherein step a) comprises utilizing one or more computational models configured to allocate greenhouse gas emissions to coproducts by one or more of: mass allocation; molar allocation; energy-basis allocation; and economic allocation.

3. The computer-implemented method of claim 2, wherein the one or more computational models comprises at least one surrogate model comprising expressions for CI which are dependent upon one or more operational parameters of at least one hydrogen production facility.

4. The computer-implemented method of claim 3, wherein the one or more operational parameters comprises efficiency as a function of production rate.

5. The computer-implemented method of any one of the preceding claims, wherein step b) comprises determining production rates for the hydrogen production facilities to satisfy a plurality of operational constraints comprising one or both of: customer demand; and network hydraulic constraints.

6. The computer-implemented method of any one of the preceding claims, wherein step b) comprises utilizing mixed integer quadratic analysis; and/or

wherein steps b) and c) are performed simultaneously in a coupled optimization process; and/or
wherein step c) further comprises determining the rate of a low-carbon or renewable feedstock to one or more of the hydrogen production facilities.

7. The computer-implemented method of any one of the preceding claims, wherein step c) further comprises allocating an inventory depletion rate to each hydrogen delivery point based on the amount of stored and transported hydrogen, and an inventory accrual rate to each hydrogen production facility based on a respective hydrogen production rate.

8. The computer-implemented method of claim 7, wherein step c) further comprises allocating production rates such that the sum of the production rates and one or more inventory depletion rates allocated to a delivery point equals a hydrogen reception rate at the delivery point.

9. The computer-implemented method of any one of the preceding claims, wherein in step c) the predetermined criteria consist of one or more of: a current or projected hydrogen demand at a delivery point; a sustainability metric of hydrogen produced by a production facility; a carbon intensity of hydrogen production by a production facility; or a carbon intensity limit for a delivery point.

10. A system for operating a hydrogen supply network responsive to carbon intensity (CI) requirements, the hydrogen supply network comprising a plurality of hydrogen production facilities and a plurality of hydrogen delivery points, the system comprising:

at least one hardware processor;

a CI determination module configured to determine the CI for hydrogen produced at the plurality of hydrogen production facilities;

an allocation mapping module configured to:

determine a network flow solution for the hydrogen supply network, the network flow solution defining a network solution space specifying a range of values for production rates of the plurality of hydrogen production facilities in the network and a range of values of delivery rates for the plurality of hydrogen delivery points in the network which satisfy a plurality of predefined operational constraints of the hydrogen supply network; and

allocate, within the determined network solution space, production rates from each of the plurality of hydrogen production facilities to each of the plurality of delivery points based on predetermined criteria associated with the delivery points to define an allocation mapping for the hydrogen supply network;

a production control module configured to generate, based on the allocation mapping, control variables for controlling the production rates of each of the plurality of hydrogen production facilities; and

a process controller configured to control the plurality of hydrogen production facilities in accordance with the generated control variables.

11. The system of claim 10, wherein the CI determination module is configured to utilize one or more computational models configured to allocate greenhouse gas emissions to coproducts by one or more of: mass allocation; molar allocation; energy-basis allocation; and economic allocation; and/or

wherein the predetermined criteria consist of one or more of: a current or projected hydrogen demand at a delivery point; a sustainability metric of hydrogen produced by a production facility; a carbon intensity of hydrogen production by a production facility; or a carbon intensity limit for a delivery point.

12. The system of claim 10, wherein the allocation mapping module is configured:

to determine production rates for the hydrogen production facilities to satisfy a plurality of operational constraints comprising one or both of: customer demand; and network hydraulic constraints; and/or

to determine a network flow solution and allocate production rates and delivery rates simultaneously in a coupled optimization process; and/or

to determine the rate of a low-carbon or renewable feedstock to one or more of the hydrogen production facilities.

13. The system of claim 10, wherein the allocation mapping module is further configured to allocate an inventory depletion rate to each hydrogen delivery point based on the amount of stored and transported hydrogen, and an inventory accrual rate to each hydrogen production facility based on a respective hydrogen production rate.

14. The system of claim 13, wherein the allocation mapping module is further configured to allocate production rates such that the sum of the production rates and one or more inventory depletion rates allocated to a delivery point equals a hydrogen reception rate at the delivery point.

15. A computer program product comprising instructions which, when the program is executed by a computer, cause the computer to carry out the method of any one of claims 1 to 9.

N

**10**

**10-1**

**10-2**

**10-3**

**10-4**

**20**

**20-1**

**20-2**

**20-3**

**20-4**

**20-5**

**30**

**30-1**

**30-2**

**30-3**

**30-4**

**30-5**

*Fig. 1*

**Fig. 2**

**Fig. 3**

**Fig. 4**

**Fig. 5**

**Fig. 6**

| | | | | | | Delivery Points | | | | | | | | |
|---|---|---|---|---|---|---|---|---|---|---|---|---|---|---|
| | | | | | Carbon Intensity Averaging Allowed? | TRUE | FALSE | FALSE | TRUE | TRUE | TRUE | TRUE | | |
| | | | | | Requires RFNBO? | FALSE | TRUE | TRUE | TRUE | FALSE | FALSE | FALSE | Total Demand | |
| | | | | | Demand | 50 | 20 | 30 | 35 | 0 | 0 | 10 | 145 | |
| | | | | | Carbon Intensity Threshold | 25 | 32.9 | 27.3 | 25.2 | N/A | N/A | N/A | | |
| | | | | | Incentive program | UK ETS | UK RTFO | UK RTFO | EU RED II RFNBO | UK ETS | UK ETS | N/A | | |
| CI Range | Carbon Intensity | RFNBO? | Actual production | Incentive programs | Plants | Low-CI fuel to an oil-refinery heater | Low-CI hydrogen to an oil-refinery hydrocracker | Compressed gas tube trailer for distribution to UK fueling stations | Liquefied hydrogen for transport to France | Recycle to blue hydrogen facility | Recycle to green ammonia dissociation facility | Inventory accrual | Allocated Production | Allocated = Actual Production |
| 15-20 | 19 | FALSE | 60 | UK LCHS | Blue hydrogen | 50 | 0 | 0 | 0 | 0 | 0 | 10 | 60 | TRUE |
| 5-35 | 30 | TRUE | 45 | UK LCHS | Hydrogen from chlor-alkali process | 0 | 20 | 0 | 25 | 0 | 0 | 0 | 45 | TRUE |
| 5-10 | 5 | TRUE | 40 | UK LCHS | Dissociated green ammonia | 0 | 0 | 30 | 10 | 0 | 0 | 0 | 40 | TRUE |
| | 18.6 | FALSE | 0 | N/A | Inventory depletion | 0 | 0 | 0 | 0 | 0 | 0 | 0 | 0 | TRUE |
| | Total Supply | 145 | | | Total Allocated Supply | 50 | 20 | 30 | 35 | 0 | 0 | 10 | | |
| | | | | | Maximum Carbon Intensity | 19.0 | 30.0 | 5.0 | 30.0 | 0.0 | 0.0 | 19.0 | Allocation Mappings | |
| | | | | | Instantaneous Weighted Average Allocated Carbon Intensity | 19.0 | 30.0 | 5.0 | 22.9 | 0.0 | 0.0 | 19.0 | | |
| | | | | | Long-Term Moving Average Allocated Carbon Intensity | N/A | N/A | N/A | 22.0 | 23.0 | 21.0 | 21.0 | | |
| | | | | | Meets Carbon Intensity Constraints | TRUE | TRUE | TRUE | TRUE | TRUE | TRUE | TRUE | | |
| | | | | | Meets RFNBO Sourcing Constraint | TRUE | TRUE | TRUE | TRUE | TRUE | TRUE | TRUE | | |
| | | | | | Allocated Supply = Actual Demand | TRUE | TRUE | TRUE | TRUE | TRUE | TRUE | TRUE | | |

# Fig. 7

## EUROPEAN SEARCH REPORT

Application Number

EP 25 16 4886

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/043406 A1 (WHIKEHART DAVID [US] ET AL) 10 February 2022 (2022-02-10) <br> * abstract * <br> * paragraph [0085] * <br> * paragraph [0190] - paragraph [0219]; figures 22,23 * <br> - - - - - | 1-15 | INV. <br> G06Q10/06 <br> G06Q50/04 |

TECHNICAL FIELDS
SEARCHED      (IPC)

G06Q

The present search report has been drawn up for all claims

| Place of search | Date of completion of the search | Examiner |
|---|---|---|
| Munich | 9 July 2025 | Chauvet, Christophe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                                                          
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 16 4886

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2025

| Patent document cited in search report | Publication date | Patent family member(s) | Publication date |
|---|---|---|---|
| US 2022043406 A1 | 10-02-2022 | CA 3126656 A1 | 04-02-2022 |
| | | CA 3126678 A1 | 04-02-2022 |
| | | CA 3126682 A1 | 04-02-2022 |
| | | CA 3126684 A1 | 04-02-2022 |
| | | US 2022041974 A1 | 10-02-2022 |
| | | US 2022042406 A1 | 10-02-2022 |
| | | US 2022043406 A1 | 10-02-2022 |
| | | US 2022044336 A1 | 10-02-2022 |
| | | US 2022148118 A1 | 12-05-2022 |
| | | US 2023082127 A1 | 16-03-2023 |
| | | US 2023259080 A1 | 17-08-2023 |
| | | US 2024126223 A1 | 18-04-2024 |
| | | US 2024160162 A1 | 16-05-2024 |
| | | US 2024319688 A1 | 26-09-2024 |
| | | US 2024319689 A1 | 26-09-2024 |

EPO FORM P0459

For more details about this annex : see Official Journal of the European Patent Office, No. 12/82